# EUROPEAN PATENT SPECIFICATION

(11) **EP 2 673 944 B1**
(45) Date of publication and mention of the grant of the patent: **01.11.2017**
(21) Application number: 12712488.1
(22) Date of filing: 20.03.2012
(51) Int. Cl.: H04M 1/02, H04M 1/03, H04M 1/23, G06F 1/16

(54) **ELECTRONIC DEVICES WITH FLEXIBLE DISPLAYS**
ELEKTRONISCHE VORRICHTUNGEN MIT FLEXIBLEN DISPLAYS
DISPOSITIFS ÉLECTRONIQUES AYANT DES DISPOSITIFS D'AFFICHAGE SOUPLES

(30) Priority: 21.03.2011 US 201161454950 P; 21.03.2011 US 201161454894 P; 21.03.2011 US 201161454936 P; 16.05.2011 US 201113108256; 28.06.2011 US 201113171295; 15.07.2011 US 201113184303; 16.03.2012 US 201213422724
(43) Date of publication of application: 18.12.2013
(73) Proprietor: Apple Inc., Cupertino, CA 95014 (US)
(72) Inventor: ROTHKOPF, Fletcher, R., Cupertino, CA 95014 (US); MYERS, Scott, A., Cupertino, CA 95014 (US); LYNCH, Stephen, Brian, Cupertino, CA 95014 (US); RAPPOPORT, Benjamin, M., Cupertino, CA 95014 (US); FRANKLIN, Jermey, C., Cupertino, CA 95014 (US)
(74) Representative: Rooney, John-Paul
(86) International application number: PCT/US2012/029844
(87) International publication number: WO 2012/129247

(56) References cited:
- EP-A1- 1 970 886
- EP-A2- 1 635 313
- EP-A2- 2 192 750
- EP-A2- 2 202 624
- WO-A1-02/095342
- DE-A1- 10 143 275

## Description

### Background

This relates generally to flexible displays, and more particularly, to electronic devices with flexible displays.

Electronic devices such as portable computers and cellular telephones are often provided with rigid displays made from rigid display structures. For example, a liquid crystal display (LCD) may be formed from a stack of rigid display structures such as a thin-film transistor layer with display pixels for providing visual feedback to a user, a color filter layer for providing the display pixels with color, a touch screen panel for gathering touch input from a user, and a cover glass layer for protecting the display and internal components.

Conventional devices may also have input-output components such as buttons, microphones, speakers, and other components. Openings are commonly formed in the housing of a conventional device to accommodate operation of these input-output components. For example, openings may be formed in a device housing to accommodate speaker and microphone ports and openings may be formed in a display cover glass layer to accommodate a speaker port and menu button.

The inclusion of these openings to accommodate input-output components may not be desirable. For example, the presence of openings may be aesthetically unappealing, may raise the risk of damage from environmental exposure, and may reduce the amount of active display area that is available to display images for a user.

There is often very little real estate available for mounting these input-output components. For example, input-output components are often mounted under an inactive portion of a display or within the sidewalls of an electronic device housing.

The size and number of input-output components such as speakers may be limited by the amount of space available in these locations. For example, a conventional device may have a single speaker mounted under an inactive portion of a display. The size and quality of such a speaker may be limited by a lack of space in the inactive portion of the display. Additionally, mounting a speaker in the inactive portion of a display may add undesirable width to the inactive portion of the display.

Devices with planar cover glass layers may be prone to scratches and damage when dropped on a surface. Users can minimize scratches and damage from drop events using a protective case. Protective cases may not, however, be convenient or aesthetically appealing for many users.

It is often desirable to produce portable devices of minimal size. Users of portable electronic devices may find a thinner device more desirable than a thicker device. Compact portable devices are sometimes provided with convex housing shapes. A convex housing shape may increase the internal volume of a device while preserving a sleek, thin look that is aesthetically pleasing to a user.

A portable compact device with a convex housing may have a display. In conventional arrangements, the display is flat, so only the portions of the device other than the display have a convex shape. This may limit the internal volume of the device and may detract from its appearance.

EP2202624 A2 discloses a display device, and the appended claims are characterised over this document. WO02095342 A1 discloses a device for detecting pressure fluctuations, a display device, a recording device and a sound reproduction system. DE10143275 A1 discloses an input device of an electronic device.

It would therefore be desirable to be able to provide improved electronic devices.

### Summary

Electronic devices may be provided with flexible displays. The flexible displays may be composed of one or more flexible layers and may be mounted on top of or under a cover layer. For example, a flexible display may be mounted on top of a rigid support member or may be mounted on the underside of a rigid cover layer.

Electronic devices may also be provided with user interface components (input-output components) such as buttons, microphones, speakers, piezoelectric actuators (for receiving electrical input from a user or tactile feedback to users), or other actuators such as vibrators, pressure sensors, and other components. These components may be mounted under portions of a flexible display.

During operation of the electronic device, the flexibility of the display may allow a user to interact with the component through the display. For example, sound waves from a speaker or localized vibrations from an actuator in an electronic device may pass through the flexible display. The flexible display may also allow an internal microphone, pressure sensor, or force sensor (or other internal components) to receive external input. For example, a user may deflect a flexible display using a finger or other external object, barometric pressure may be monitored through the flexible display, or sound waves may be received through the flexible display.

Components may receive input or may supply output through a physically deformed portion of the flexible display (e.g., a deformation that occurs when a user presses on the display to compress the component). In some configurations, a portion of the flexible display may serve as a membrane that forms part of a microphone, speaker, pressure sensor, or other electronic component.

The ability of a user to compress a component such as a button switch by deforming the flexible display may allow the area of a device available for visual display to be enlarged. For example, the active area of a flexible display may overlap a component such as a button or speaker.

If desired, a flexible display may be deformed by an internal component to provide audio or tactile feedback to a user. For example, structures inside an electronic device may be pressed against portions of a flexible display to temporarily create an outline for a virtual on-screen button or to temporarily create a grid of ridges that serve to delineate the locations of keys in a keyboard (keypad).

Electronic devices may be provided with concave displays. Peripheral edge portions of a concave display may be raised relative to depressed central portions of the concave display. This helps reduce scratches and other damage due to contact with the central portion of the display.

Concave displays may include one or more flexible display layers and may be mounted on top of or under a cover layer. For example, a flexible display layer may be mounted on top of a rigid support member or may be mounted on the underside of a rigid cover layer

Concave displays may also include touch-sensitive capabilities by stacking a touch sensor array layer on top of or under flexible display layers. Rigid concave displays may be formed from a flexible display layer, a touch-sensitive layer, and a rigid cover layer or rigid support structure.

Devices having concave displays formed from curved flexible display layers may help maximize the use of the internal volume of an electronic device.

Electronic devices may be provided with convex displays. The convex displays may include one or more flexible display layers and may be mounted on top of or under a cover layer with a curved shape. For example, a flexible display layer may be mounted on top of a rigid support member having a convex surface or may be mounted on the concave underside of a rigid convex display cover layer.

Convex displays may be provided with touch-sensitive capabilities by stacking a touch sensor array on top of or under flexible display layers. Rigid convex displays may be formed from a flexible display layer, a touch-sensitive layer, and a rigid cover layer or support structure.

Devices having convex displays formed from curved flexible display layers may help maximize the use of the internal volume of an electronic device.

A display cover such as a cover glass layer may be mounted over a flexible display. The flexible display may be an organic light-emitting diode display having a flexible substrate formed from one or more sheets of polymer. The flexible display may include a touch sensor layer having an array of capacitive touch sensor electrodes.

There may be one or more display-based speaker structures in the electronic device. The display-based speaker structures may be mounted under the flexible display. Portions of the flexible display may be used as speaker membranes for the display-based speaker structures.

The flexible display may have an active area that is configured to display images to a user. Speaker membranes may be formed from the active portion of the flexible display. The display-based speaker structures may be driven by transducers that receive an electrical audio signal input from circuitry in the electronic device. Piezoelectric transducers or transducers formed from coils and magnets may be used to drive the display-based speaker structures.

A stiffening structure may be used to stiffen a portion of a flexible display that is used as a speaker membrane. The stiffening structure may be formed from a layer of foam interposed between sheets of stiffening material. The stiffening structure may form a stiff and lightweight support structure that allows the speaker membrane to respond accurately to the transducer.

A suspension structure may be used to attach a display-based speaker structure to surrounding housing structures. The suspension structure may form a pliant interface between the speaker structure and the surrounding housing structures. The suspension structure may allow the speaker structure to vibrate during speaker operation while inhibiting lateral motion of the speaker structure.

Speaker structures may be configured to achieve a desired frequency response. The electronic device housing in which a speaker structure is mounted may be provided with an acoustic port to tune speaker frequency response. The type of transducer that is used in a speaker may be selected to tune speaker frequency response. The size and placement of internal device components that affect speaker volume and speaker mass may also be selected to tune speaker frequency response.

An electronic device may be provided with an array of display-based speaker structures. The speaker membrane for each speaker structure may be stiffened with an associated stiffening structure. Each stiffened speaker membrane may be surrounded by a ring of flexible display that is configured to absorb lateral vibrations and thus prevent interference between neighboring speakers.

Further features of the invention, its nature and various advantages will be more apparent from the accompanying drawings and the following detailed description of the preferred embodiments.

### Brief Description of the Drawings

FIG. 1 is a perspective view of an illustrative electronic device with a flexible display and internal components in accordance with an embodiment of the present invention.
FIG. 2 is a diagram of an illustrative set of display layers that may be used to form a flexible display in accordance with an embodiment of the present invention.
FIG. 3 is a cross-sectional side view of a portion of an illustrative electronic device in the vicinity of an internal user interface component in accordance with an embodiment of the present invention.
FIG. 4 is a cross-sectional side view of a portion of an illustrative electronic device in the vicinity of a button in accordance with an embodiment of the present invention.
FIG. 5 is a cross-sectional side view of another embodiment of a portion of an illustrative electronic device in the vicinity of a button in accordance with an embodiment of the present invention.
FIG. 6 is a cross-sectional side view of a portion of an illustrative electronic device in the vicinity of an audio component in accordance with an embodiment of the present invention.
FIG. 7 is a cross-sectional side view of another embodiment of a portion of an illustrative electronic device in the vicinity of an audio component in accordance with an embodiment of the present invention.
FIG. 8 is a cross-sectional side view of yet another embodiment of a portion of an illustrative electronic device in the vicinity of an audio component in accordance with an embodiment of the present invention.
FIG. 9 is a cross-sectional side view of a portion of an illustrative electronic device in the vicinity of an actuator such as a piezoelectric actuator in accordance with an embodiment of the present invention.
FIG. 10 is a cross-sectional side view of a portion of an illustrative electronic device in the vicinity of an internal structural component in accordance with an embodiment of the present invention.
FIG. 11 is a cross-sectional side view of a portion of an illustrative electronic device in the vicinity of a combined internal interface component in accordance with an embodiment of the present invention.
FIG. 12 is a perspective view of a portion of an illustrative electronic device with a flexible display and a combined internal interface component in accordance with an embodiment of the present invention.
FIG. 13 is a perspective view of a portion of an illustrative electronic device with a flexible display and a combined internal interface component mounted to actuator stage in accordance with an embodiment of the present invention.
FIG. 14 is a cross-sectional side view of a portion of an illustrative electronic device in the vicinity of an internal structural component mounted to an actuator stage in accordance with an embodiment of the present invention.
FIG. 15 is a cross-sectional side view of a portion of an illustrative electronic device with a cover and an internal structural component mounted to an actuator in accordance with an embodiment of the present invention.
FIG. 16 is a cross-sectional side view of a portion of an illustrative electronic device in the vicinity of a pressure sensor in accordance with an embodiment of the present invention.
FIG. 17 is a perspective view of an illustrative electronic device with a concave display and a bezel in accordance with an embodiment of the present invention.
FIG. 18 is a cross-sectional side view of an illustrative electronic device having a concave display with a flexible display layer that conforms to the concave shape of a support structure in accordance with an embodiment of the present invention.
FIG. 19 is a cross-sectional side view of a portion of an illustrative electronic device having a cover layer and a flexible display layer joined by an adhesive layer in accordance with an embodiment of the present invention.
FIG. 20 is a cross-sectional side view of a portion of an illustrative electronic device having a flexible display layer, a flexible touch-sensitive layer, and a cover layer joined by adhesive layers in accordance with an embodiment of the present invention.
FIG. 21 is a cross-sectional side view of an illustrative electronic device having a concave display with a radius of curvature chosen to protect the device from a drop surface in accordance with an embodiment of the present invention.
FIG. 22 is a perspective view of an illustrative electronic device with a convex display and a bezel formed from a housing structure in accordance with an embodiment of the present invention.
FIG. 23 is a cross-sectional side view of an illustrative electronic device with a convex display and internal components in accordance with an embodiment of the present invention.
FIG. 24 is a cross-sectional side view of a portion of an illustrative electronic device having a convex display with a flexible display layer that conforms to a support structure in accordance with an embodiment of the present invention.
FIG. 25 is a cross-sectional side view of a portion of an illustrative electronic device having a convex cover layer and a flexible display layer joined by an adhesive layer in accordance with an embodiment of the present invention.
FIG. 26 is a cross-sectional side view of a portion of an illustrative electronic device having a flexible display layer, a touch-sensitive layer and a convex cover layer joined by adhesive layers in accordance with an embodiment of the present invention.
FIG. 27 is a cross-sectional perspective view of an illustrative electronic device having a convex display and a connector port arranged to use the internal volume of the device in accordance with an embodiment of the present invention.
FIG. 28 is a cross-sectional perspective view of an illustrative electronic device having a convex display and internal components in accordance with an embodiment of the present invention.
FIG. 29 is a cross-sectional side view of an illustrative electronic device substantially surrounded by a convex display in accordance with an embodiment of the present invention.
FIG. 30 is a diagram of an illustrative electronic device such as a portable computer having a display and one or more speaker structures in accordance with an embodiment of the present invention.
FIG. 31 is a diagram of an illustrative electronic device such as a cellular telephone or other handheld device having a display and one or more speaker structures in accordance with an embodiment of the present invention.
FIG. 32 is a diagram of an illustrative electronic device such as a tablet computer having a display and one or more speaker structures in accordance with an embodiment of the present invention.
FIG. 33 is a diagram of an illustrative electronic device such as a computer monitor with a built-in computer having a display and one or more speaker structures in accordance with an embodiment of the present invention.
FIG. 34 is a diagram of an illustrative set of display layers that may be used to form a flexible display in accordance with an embodiment of the present invention.
FIG. 35 is a diagram of an illustrative set of layers that may be used to form an organic light-emitting diode display in accordance with an embodiment of the present invention.
FIG. 36 is a cross-sectional side view of a portion of an illustrative electronic device in which a flexible display forms part of a speaker structure in accordance with an embodiment of the present invention.
FIG. 37 is a cross-sectional side view of a portion of an illustrative electronic device in which a flexible display forms part of a speaker structure in accordance with an embodiment of the present invention.
FIG. 38 is a cross-sectional side view of a portion of an illustrative electronic device in which a flexible display forms part of a speaker structure in accordance with an embodiment of the present invention.
FIG. 39 is a perspective view of an illustrative electronic device of the type shown in FIG. 38 having a cover layer with speaker openings in accordance with an embodiment of the present invention.
FIG. 40 is a cross-sectional side view of a portion of an illustrative electronic device in which a flexible display is stiffened with a support structure in accordance with an embodiment of the present invention.
FIG. 41 is a cross-sectional side view of a portion of an illustrative electronic device having a curved flexible display with a curved support structure in accordance with an embodiment of the present invention.
FIG. 42 is a cross-sectional side view of a portion of an illustrative electronic device in which a flexible display forms part of a single speaker structure in accordance with an embodiment of the present invention.
FIG. 43 is a cross-sectional side view of a portion of an illustrative electronic device in which a flexible display forms part of an array of speaker structures in accordance with an embodiment of the present invention.
FIG. 44 is a bottom view of an illustrative electronic device of the type shown in FIG. 43 having a flexible display that forms part of an array of speaker structures in accordance with an embodiment of the present invention.

### Detailed Description

Electronic devices may be provided with flexible displays. A flexible display may include one or more flexible layers. If desired, the flexible display may include a display cover layer such as a flexible or rigid display cover layer.

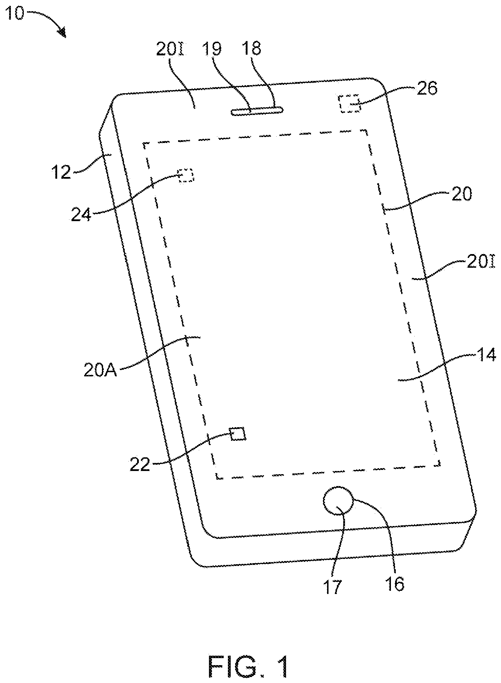

In some configurations, an electronic device may be provided with a flexible display and user interface components that are positioned behind, abutted against or integrated into the flexible display. FIGS. 1-16 show examples of configurations in which user interface components may be positioned behind, abutted against or integrated into the flexible display.

In some configurations, an electronic device may be provided with a concave display having one or more flexible display layers. FIGS. 1, 2, and 17-21 show examples of configurations in which an electronic device may be provided with a concave display having one or more flexible display layers.

In some configurations, an electronic device may be provided with a convex display having one or more flexible display layers. FIGS. 1, 2, and 22-29 show examples of configurations in which an electronic device may be provided with a convex display having one or more flexible display layers.

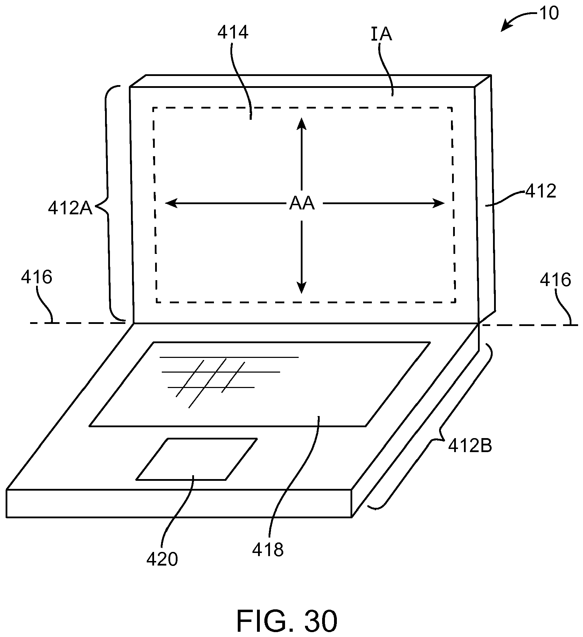

In some configurations, a portion of the flexible display may form a membrane structure of an electronic component such as a speaker, a microphone, a laser microphone or a pressure sensor. FIGS. 30-44 show examples of configurations in which a portion of the flexible display may form a membrane structure of an electronic component.

As shown in the examples of FIGS. 1-16, an electronic device may be provided with a flexible display and user interface components. User interface components may include buttons, switches, microphones, actuators such as solenoids, motors, and piezoelectric actuators, connector ports, touch screens, proximity sensors and other components for accepting input from, or transmitting information to, a user or the surrounding environment.

Flexible displays may be formed from flexible layers such as a flexible display layer (e.g., a flexible organic light-emitting diode array), a flexible touch-sensitive layer (e.g., a sheet of polymer with an array of transparent capacitor electrodes for a capacitive touch sensor), a flexible substrate layer, etc. These flexible layers may, if desired, be covered by a flexible or rigid cover layer (sometimes referred to as a cover glass) or may be supported by a support structure (e.g., a rigid support structure on the underside of the flexible layers). In electronic devices with flexible displays that are covered by rigid cover layers, the cover layers may be provided with openings that provide access to the flexible layers of the display in the vicinity of a user interface device. For example, a cover glass layer may have an opening that allows a button member to move relative to the cover glass layer. As the button member moves within the opening, underlying portions of the flexible display may be deformed (e.g., to allow actuation of an associated switch).

To maximize the area of the portion of the flexible display that is available for displaying visual information to the user, user interface components may be positioned behind, abutted against or integrated into the flexible display. The deformable nature of the flexible display may allow a user to interact with the user interface components (input-output components) by moving the display into contact with the user interface components or by otherwise allowing the display to locally flex (e.g., to allow sound to pass through the flexible display or to allow a barometric pressure measurements of the exterior environment to be made by an internal pressure sensor). If desired, a portion of the flexible display may form a membrane portion of an electrical component. Components that may be provided with a membrane that is formed from a portion of a flexible display include microphones, laser microphones, pressure sensors, speakers, etc.

An illustrative electronic device of the type that may be provided with a flexible display is shown in FIG. 1.
Electronic device 10 may be a portable electronic device or other suitable electronic device. For example, electronic device 10 may be a laptop computer, a tablet computer, a somewhat smaller device such as a wrist-watch device, pendant device, or other wearable or miniature device, a cellular telephone, a media player, etc.

Device 10 may include a housing such as housing 12. Housing 12, which may sometimes be referred to as a case, may be formed of plastic, glass, ceramics, fiber composites, metal (e.g., stainless steel, aluminum, etc.), other suitable materials, or a combination of these materials. In some situations, parts of housing 12 may be formed from dielectric or other low-conductivity material. In other situations, housing 12 or at least some of the structures that make up housing 12 may be formed from metal elements.

Device 10 may have a flexible display such as flexible display 14. Flexible display 14 may be formed from multiple layers of material. These layers may include a touch sensor layer such as a layer on which a pattern of indium tin oxide (ITO) electrodes or other suitable transparent electrodes have been deposited to form a capacitive touch sensor array. These layers may also include a layer that contains an array of display pixels. The touch sensor layer and the display layer may be formed using flexible sheets of polymer or other substrates having thicknesses of 10 microns to 0.5 mm or other suitable thicknesses (as an example).

The display pixel array may be, for example, an organic light-emitting diode (OLED) array. Other types of flexible display pixel arrays may also be formed (e.g., electronic ink displays, etc.). The use of OLED technology to form flexible display 14 is sometimes described herein as an example. This is, however, merely illustrative. Flexible display 14 may be formed using any suitable flexible display technology. The use of flexible displays that are based on OLED technology is merely illustrative.

In addition to these functional display layers (i.e., the OLED array and the optional touch sensor array), display 14 may include one or more structural layers. For example, display 14 may be covered with a flexible or rigid cover layer and/or may be mounted on a support structure (e.g., a rigid support). Layers of adhesive may be used in attaching flexible display layers to each other and may be used in mounting flexible display layers to rigid and flexible structural layers.

In configurations for display 14 in which the cover layer for display 14 is flexible, input-output components that rely on the presence of flexible layers may be mounted at any suitable location under the display (e.g., along peripheral portions of the display, in a central portion of the display, etc.). In configurations for display 14 in which the flexible layers are covered by a rigid cover glass layer or other rigid cover layer, the rigid layer may be provided with one or more openings and the electronic components may be mounted under the openings. For example, a rigid cover layer may have openings such as a circular opening 16 for button 17 and a speaker port opening such as speaker port opening 18 (e.g., for an ear speaker for a user). Device 10 may also have other openings (e.g., openings in display 14 and/or housing 12 for accommodating volume buttons, ringer buttons, sleep buttons, and other buttons, openings for an audio jack, data port connectors, removable media slots, etc.).

In some embodiments, portions of flexible display 14 such as peripheral regions 20I may be inactive and portions of display 14 such as rectangular central portion 20A (bounded by dashed line 20) may correspond to the active part of display 14. In active display region 20A, an array of image pixels may be used to present text and images to a user of device 10. In active region 20A, display 14 may include touch sensitive components for input and interaction with a user of device 10. If desired, regions such as regions 20I and 20A in FIG. 1 may both be provided with display pixels (i.e., all or substantially all of the entire front planar surface of a device such as device 10 may be covered with display pixels).

Device 10 may, if desired, have internal user interface components such as buttons 17 or speaker component 19 that occupy openings such as openings 16 and 18 respectively in an optional rigid cover layer of flexible display 14. Buttons 17 may be based on dome switches or other switch circuitry. Buttons 17 may include button members that form push buttons (e.g., momentary buttons), slider switches, rocker switches, etc. Device 10 may include internal structural components such as structural component 22 that add a raised structure to a portion of flexible display 14. Device 10 may include components such as interface components 24 and 26 that may be fully internal to device 10, but that receive input from the user or from the surrounding environment through physical interaction with flexible display 14. Interface components 22, 24, and 26 may be positioned in active region 20A or inactive region 20I of flexible display 14. Interface components 22, 24, and 26 may be positioned separately from one another or may be commonly located to form a combined component with structural and internal features. Interface components 24 and 26 may be positioned underneath flexible display 14 so that flexible display 14 must be deformed in order to contact components 24 or 26 or, if desired may be positioned to remain in constant contact with flexible display 14.

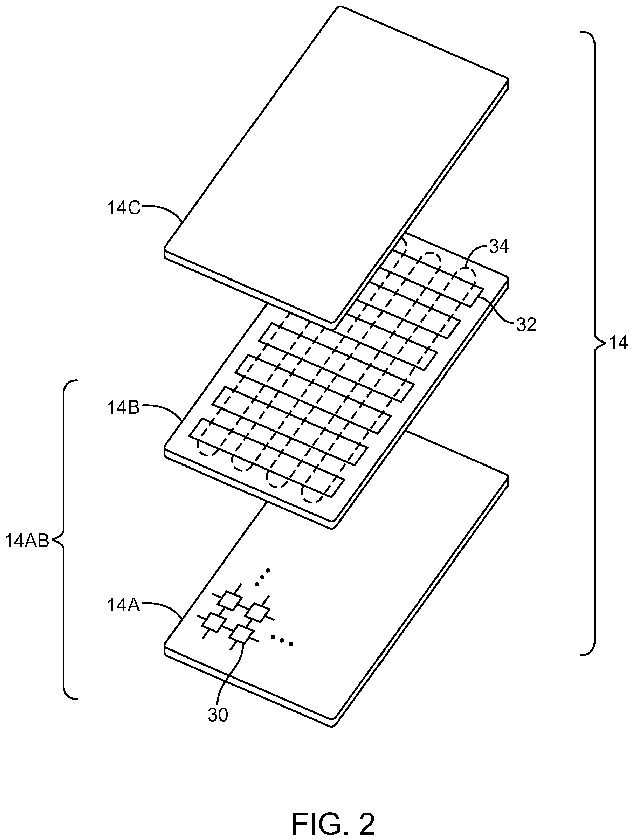

An exploded perspective view of an illustrative display is shown in FIG. 2. As shown in FIG. 2, flexible display 14 may be formed by stacking multiple layers including flexible display layer 14A, touch-sensitive layer 14B, and cover layer 14C. Flexible display 14 may also include other layers of material such as adhesive layers, optical films, or other suitable layers. Flexible display layer 14 may include image pixels formed form light-emitting diodes (LEDs), organic LEDs (OLEDs), plasma cells, electronic ink elements, liquid crystal display (LCD) components, or other suitable image pixel structures compatible with flexible displays.

Touch-sensitive layer 14B may incorporate capacitive touch electrodes such as horizontal transparent electrodes 32 and vertical transparent electrodes 34. Touch-sensitive layer 14B may, in general, be configured to detect the location of one or more touches or near touches on touch-sensitive layer 14B based on capacitive, resistive, optical, acoustic, inductive, or mechanical measurements, or any phenomena that can be measured with respect to the occurrences of the one or more touches or near touches in proximity to touch sensitive layer 14B.

Software and/or hardware may be used to process the measurements of the detected touches to identify and track one or more gestures. A gesture may correspond to stationary or non-stationary, single or multiple, touches or near touches on touch-sensitive layer 14B. A gesture may be performed by moving one or more fingers or other objects in a particular manner on touch-sensitive layer 14B such as tapping, pressing, rocking, scrubbing, twisting, changing orientation, pressing with varying pressure and the like at essentially the same time, contiguously, or consecutively. A gesture may be characterized by, but is not limited to a pinching, sliding, swiping, rotating, flexing, dragging, or tapping motion between or with any other finger or fingers. A single gesture may be performed with one or more hands, by one or more users, or any combination thereof.

Cover layer 14C may be formed from plastic or glass (sometimes referred to as display cover glass) and may be flexible or rigid. If desired, the interior surface of peripheral inactive portions 20I of cover layer 14C may be provided with an opaque masking layer on such as black ink.

Touch-sensitive flexible display section 14AB may be formed from display pixel array layer 14A and optional touch sensor layer 14B.

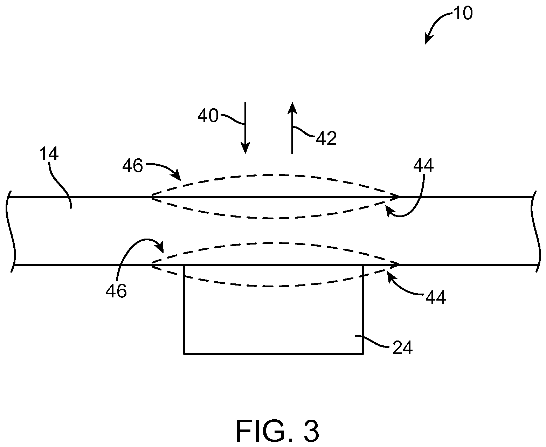

FIG. 3 is a cross-sectional side view of a portion of flexible display 14 in the vicinity of internal user interface component 24. Flexible display 14 may be deformed away from its natural shape under pressure. For example, flexible display 14 may be deflected by pressure exerted by a user or by other external forces in direction 40. As shown in FIG. 3, pressure in direction 40 may cause flexible display 40 to deform as indicated by dashed lines 44. Internal component 24 may be configured to receive input due to deformation of flexible display 14. Internal component 24 may also provide a temporary return (restoring) pressure in direction 42.

Pressure in direction 42 may cause flexible display 14 to temporarily deform outward of device 10 as indicated by dashed lines 46. Pressure in direction 42 may, if desired, be formed by an internal actuator that deforms display 14 to provide a desired tactile sensation on the surface of display 14 to a user of device 10. Flexible display 14 may have a natural resiliency that, following deformation as indicated by dashed lines 44, causes flexible display to temporarily deform outward of device 10 as indicated by dashed lines 46 before returning to its natural shape. Internal component 24 may be a button, an actuator such as a motor, solenoid, vibrator, or piezoelectric actuator, a pressure sensor, an audio component such as a microphone or speaker, or other component. Because display 14 is flexible, these components may operate effectively, even when covered by display 14. For example, audio components such as microphones and speakers may receive and transmit sound through flexible display 14. A barometric pressure sensor or a force sensor may also receive input through flexible display 14. Components such as actuators may be used to temporarily create raised ridges or other external features on the surface of the flexible display (e.g., to indicate to a user where an on-screen button or group of buttons is located). The portion of display 14 under which components 24 are mounted may be active (i.e., a portion of the display that contains OLED pixels or other display pixels) or inactive (i.e., a peripheral portion of the display outside of the active region).

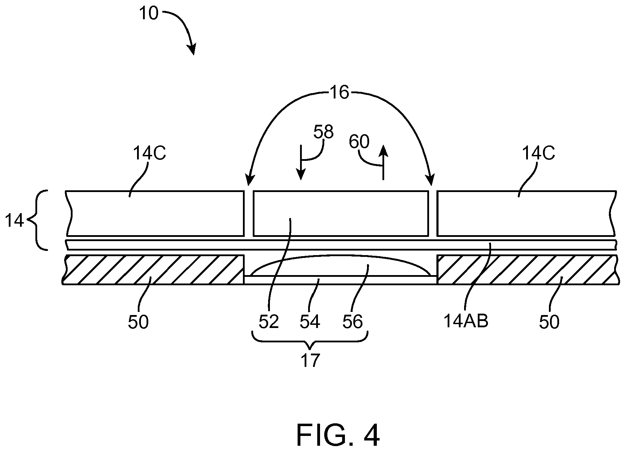

FIG. 4 is a cross-sectional side view of a portion of device 10 in the vicinity of button 17 of device 10. As shown in FIG. 4, button 17 may have a button member such as button member 52 that reciprocates within opening 16 of cover layer 14C. When a user presses the exterior of button member 52 in direction 58, button member 52 may press against touch-sensitive flexible display section (layer) 14AB. Touch-sensitive flexible display section 14AB may be deformed to depress a dome switch such as dome switch 56 or other switch mechanism, thereby activating the switch (e.g., shorting internal switch terminals together to close the switch). Dome switches such as dome switch 56 may, if desired, be mounted to printed circuits such as printed circuit 54. Dome switch 56 may have a dome-shaped biasing member that pushes touch-sensitive flexible display section 14AB outward in direction 60 when the user releases pressure from button member 52. Dome switch 54 and printed circuit 54 may be recessed in a support structure such as support structure 50 behind flexible display 14. Other types of switches may used if desired, such as switches with spring-based biasing members or other biasing structures that bias button members such as button member 52. The use of a dome switch with a dome-shaped biasing structure is merely illustrative.

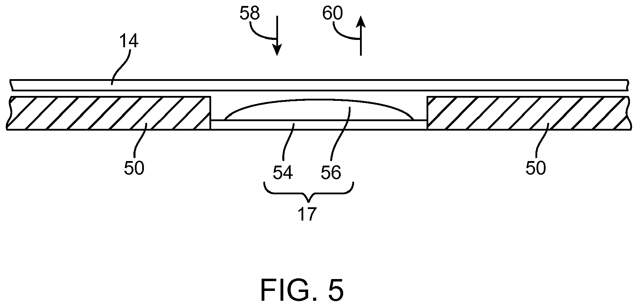

FIG. 5 is a cross-sectional side view of a portion of device 10 in the vicinity of button 17 of device 10. The illustrative embodiment of FIG. 5 differs from the illustrative embodiment of FIG. 4 in that cover layer 14C of flexible display 14 is not a rigid cover layer, but a flexible cover layer. In an embodiment in which flexible display 14 contains a flexible cover layer 14C, button 17 includes dome switch 56 and printed circuit 54. In the embodiment of FIG. 5, a user may press the exterior of flexible display 14 in direction 58. Flexible display 14 may be deformed to depress dome switch 56 or other switch mechanism, thereby activating the switch. As in FIG. 4, dome switches such as dome switch 56 may, if desired, be mounted to printed circuits such as printed circuit 54. Dome switch 56 may have a dome-shaped biasing member that pushes flexible display 14 outward in direction 60 when the user releases pressure from button member 52. Dome switch 54 and printed circuit 54 may be mounted in support structures 50 behind flexible display 14. Other types of switches may use spring-based biasing members or other biasing structures to bias button members such as button member 52. The use of a dome switch with a dome-shaped biasing structure is merely illustrative.

Providing device 10 with flexible display 14 without the need for an opening in flexible display 14 to access button 17 allows flexible display 14 to extend over button 17 without disruption. In both the FIG. 4 and FIG. 5 configurations, the portion of the flexible display that overlaps the button may be an active display portion or an inactive display portion. When an active display portion is configured so as to overlap buttons and other components, there is generally more area available for the active display portion. The presence of flexible display 14 over button 17 (or other components) may also reduce the risk of moisture or dirt entering into the interior of device 10.

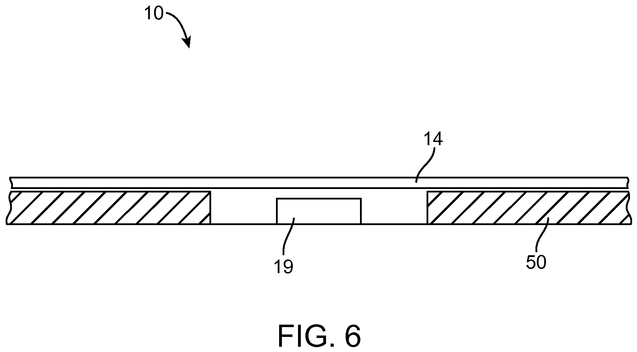

FIG. 6 is a cross-sectional side view of a portion of device 10 in the vicinity of audio component 19. Audio component 19 may be recessed in a chassis 50 behind flexible display 14. Audio component 19 may be a speaker for providing sound to a user of device 10 or a microphone for receiving input from a user or the external environment. In the embodiment shown in FIG. 6, sound may be transmitted through flexible display 14 to a microphone or from a speaker. The portion of flexible display 14 that overlaps audio component 19 may be active or inactive. Arrangements in which component 19 is covered with part of the active area of display 14 may allow the size of active region 20A of flexible display 14 to be increased. The presence of flexible display 14 over audio component 19 may also reduce the risk of moisture or dirt entering into the interior of device 10.

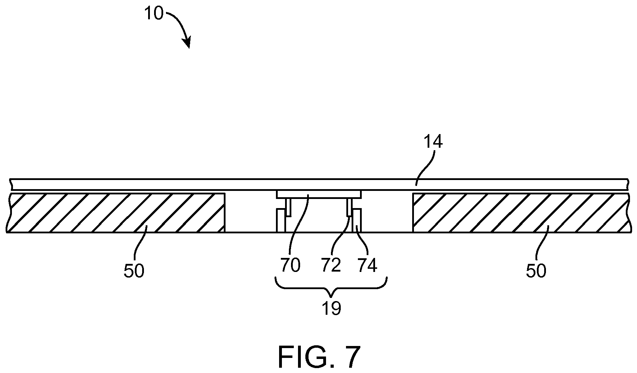

FIG. 7 is a cross-sectional side view of a portion of device 10 in the vicinity of another embodiment of audio component 19. In the illustrative embodiment of FIG. 7, audio component 19 may be a speaker or microphone that contains a diaphragm such as diaphragm 70. Diaphragm 70 may be formed from a separate structure that is attached to the underside of flexible display 14 or may be formed from a part of flexible display 14. As in the embodiment shown in FIG. 6, audio component 19 may be mounted within support structures 50. Audio component 19 may include a magnet such as magnet 74 and a coil such as coil 72 in which current may flow. If audio component 19 is a speaker, current may be driven through coil 72 to induce motion in diaphragm 70 and thereby emit sound through flexible display 14. If audio component 19 is a microphone, sound waves originating from the exterior of device 10 may induce vibrations in flexible display 14 which are transmitted to diaphragm 70 and ultimately to coil 72 in which current may be induced. The current produced in coil 72 may be used to transmit sound information to device 10. Diaphragm 70 may be a separate member in contact with flexible display 14 or may be an integral part of flexible display 14.

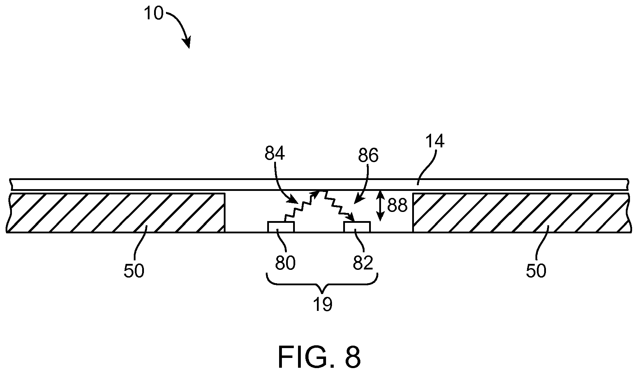

FIG. 8 is a cross-sectional side view of a portion of device 10 in the vicinity of another possible embodiment of audio component 19. As shown in FIG. 8, audio component 19 may be a laser microphone which uses vibrations in flexible display 14 induced by sound originating external to device 10 to produce an signal to be transmitted to device 10. As shown in FIG. 8, audio component 19 may be recessed in support structures 50. Audio component 19 may include a light emitting component such as laser component 80. Laser component 80 may emit a laser beam such as laser beam 84 in the direction of flexible display 14. Laser beam 84 may reflect off of flexible display 14 and a reflected laser beam such as reflected laser beam 86 may be absorbed by a laser absorbing component 82.

Laser beam 84 and reflected laser beam 86 may be used in combination with laser 80 and photosensitive element 82 to monitor variations in distance 88 from flexible display 14 to component 80 and component 82. Sound waves originating external to device 10 may induce vibrations in flexible display 14 causing distance 88 to oscillate. The oscillations in distance 88 may be converted into sound-related information by device 10.

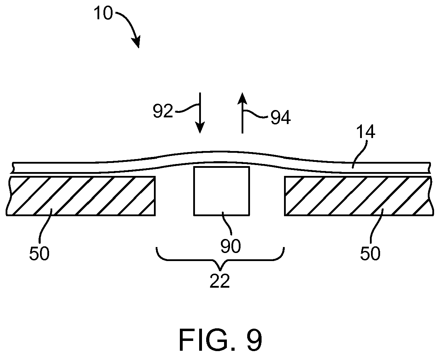

FIG. 9 is a cross-sectional side view of a portion of device 10 in the vicinity of a component such as component 22 of FIG. 1. In the embodiment shown in FIG. 9, component 22 may contain an actuator such as a piezoelectric (actuator 90). Piezoelectric actuators such as piezoelectric actuator 90 may vary in shape (e.g., thickness) in response to applied control voltages and may produce an output voltage when compressed (i.e., the piezoelectric element in actuator 90 may serve as a force sensor in addition to serving as a controllable actuator). A user of device 10 may exert force on flexible display 14 in direction 92. Flexible display 14 may be deformed to exert a mechanical pressure on piezoelectric element 90 or other force sensor, inducing a voltage which may be transmitted to device 10. Conversely, piezoelectric actuator 90 may be used to provide tactile feedback to a user of device 10. A voltage difference applied to the surfaces of piezoelectric actuator 90 may induce an expansion of piezoelectric actuator 90. Piezoelectric actuator 90 may then deform flexible display 90 in direction 94 providing tactile feedback to a user of device 10.

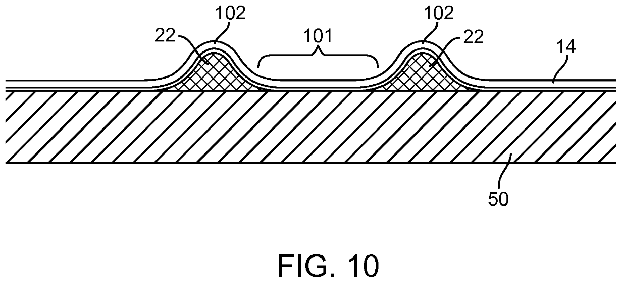

FIG. 10 is a cross-sectional side view of a portion of device 10 in the vicinity of structural component 22 of device 10. Structural component 22 may cause a permanent deformation such as deformation 102 in flexible display 14 to indicate the location of portion 101 of touch-sensitive layer 14B in display 14 to the user of device 10. Portion 101 may be, for example, a letter key or other button in a virtual keypad (keyboard) displayed on flexible display 14. A touch sensor array associated with display 14 may be used to gather user input (i.e., the touch sensor array may be used to determine when a user has pressed the virtual key associated with portion 101). The location of portion 101 may also be indicated visually using associated display pixels in flexible display 14. At times, a user may desire to be able to locate portion 101 without having to look at flexible display 14. Deforming flexible display 14 in the vicinity of portion 101 using structural component 22 may allow a user to locate portion 101 without visual aid. Structural component 22 may be an isolated component indicating the location of a single portion 101 of touch-sensitive layer 14B or may be one of an array of components 22 indicating the locations of an array of portions 101 (e.g., the array of letter, number, and symbol keys in a virtual keypad displayed on display 14). Structural component 10 may be a separate component mounted to support structures 50 or may be an integral part of support structures 50.

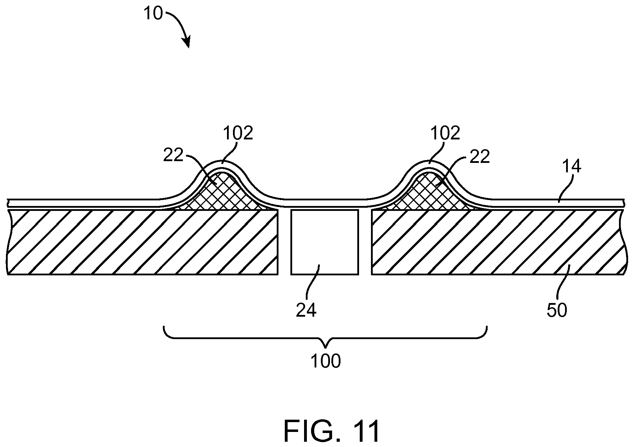

FIG. 11 is a cross-sectional side view of a portion of device 10 in the vicinity of a hybrid component such as component 100. Component 100 may include both an internal interface component such as internal component 24 and a structural component such as structural component 22. Structural component 22 may cause a permanent deformation such as deformation 102 in flexible display 14 in the vicinity of internal component 24 to indicate the location of internal component 22 to the user of device 10. The presence of flexible display 14 between the user of device 10 and internal component 24 may obscure the location of internal interface component 24. The location of interface component 24 may be indicated visually using display pixels in flexible display 14. The deformation of flexible display 14 in the vicinity of interface component 24 using structural component 22 may also allow the user to locate interface component 24 without visual aid. Component 100 may be an isolated component indicating the location of a single interface component 24 of touch-sensitive layer 14B or may be one of an array of components 100 indicating the locations of an array of interface components 24.

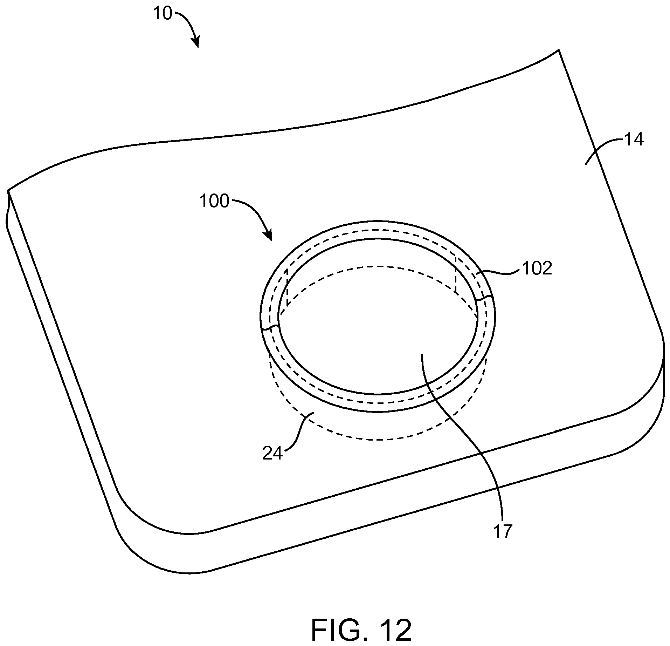

FIG. 12 is a perspective view of an embodiment of device 10 in which internal component 24 is a button such as button 17. In the embodiment of FIG. 12, as in FIG. 11, component 100 includes internal component 24 and structural component 22 (shown in FIG. 11). As shown in FIG. 12, a ridge or other deformation such as deformation 102 in flexible display 14 may be used to indicate the location of button 17.

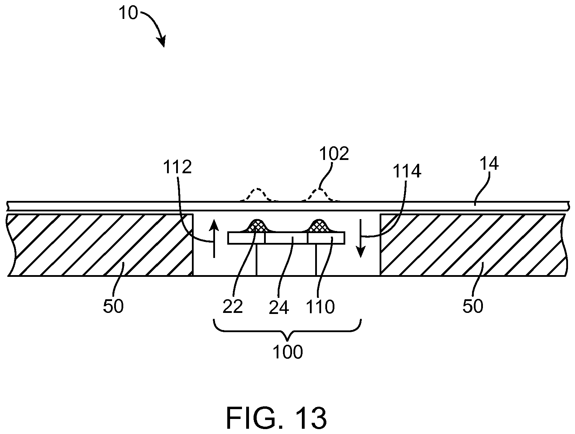

FIG. 13 is a cross-sectional side view of a portion of device 10 in the vicinity of another illustrative embodiment of a hybrid component such as component 100 which includes an internal interface component such as internal component 24 and a structural component such as structural component 22 mounted to an actuator such as actuator stage 110. Component 100 may be recessed in chassis 50. Actuator stage 110 may be electrically or mechanically raised in direction 112 to temporarily produce deformations such as deformations 102 in flexible display 14. Deformations 102 in flexible display 14 may indicate the location of internal interface device 24 to a user of device 10. Actuator stage 110 may be electrically or mechanically lowered in direction 114 to remove deformations 102 in flexible display 14 returning flexible display 14 to its original shape. Component 100 may be an isolated component indicating the location of a single interface component 24 of touch-sensitive layer 14B or may be one of an array of components 100 indicating the locations of an array of respective interface components 24.

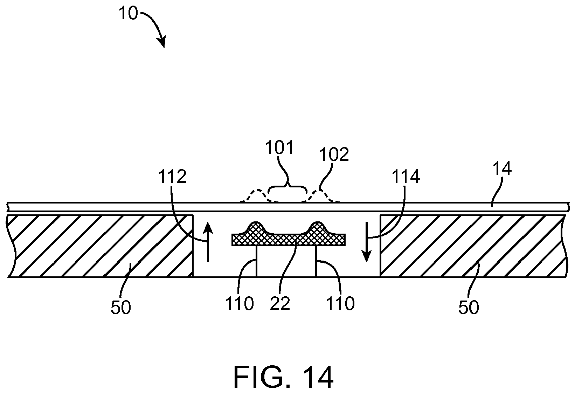

FIG. 14 is a cross-sectional side view of a portion of device 10 in the vicinity of another illustrative embodiment of a component such as structural component 22. In the arrangement of FIG. 14, structural component 22 is mounted an actuator such as actuator stage 110. Some modes of operating device 10 may require visual interaction with a user of device 10 (e.g., a mode involving the display of images or video). In these visual modes, the location of portion 101 of touch-sensitive layer 14B of flexible display 14 may be indicated visually using display pixels in flexible display 14.

In other modes of operation of device 10, a user of device 10 may wish to determine the location of portion 101 without visual aid. In the embodiment shown in FIG. 14, component 22 may be recessed in support structures 50. Actuator stage 110 may be electrically or mechanically raised in direction 112 to move structural component 22 into contact with flexible display 14 to temporarily produce deformations such as deformations 102 in flexible display 14. Deformations 102 may indicate the location of portion 101 to a user of device 10. When no longer needed for tactile interaction (e.g., upon switching to a video display mode), actuator 110 may be electrically or mechanically moved in direction 114 to lower structural component 22 and remove deformations 102 in flexible display 14.

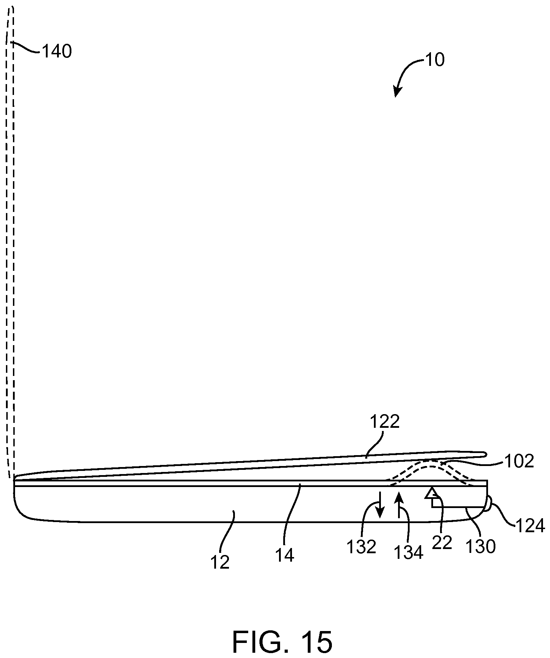

FIG. 15 is a cross-sectional side view of an embodiment of device 10 in which device 10 includes housing 12 and cover member 122. Cover member 122 may be formed of plastic, glass, ceramics, fiber composites, metal (e.g., stainless steel, aluminum, etc.), other suitable materials, or a combination of these materials. Cover member 122 may be a single structure or may include multiple cover structures. In order to facilitate lifting of cover 122 by a user of device 10, structural component 22 may be coupled to an actuator 130 which may be used to lift structural component 122 in direction 134. When lifted, structural component 134 may cause a deformation such as deformation 102 in flexible display 14. Flexible display 14 may exert a pressure on cover member 122, lifting cover member 122 in direction 134 allowing the user to grip cover member 122 in order to lift cover member 122 to an open position such as open position 140. Actuator 130 may then be used to lower structural component 22 in direction 132 in order to allow flexible display 14 to return to its original shape. Actuator 130 may be activated in response to a control signal produced by the user using actuator switch 124 or by a control signal from other suitable control circuitry.

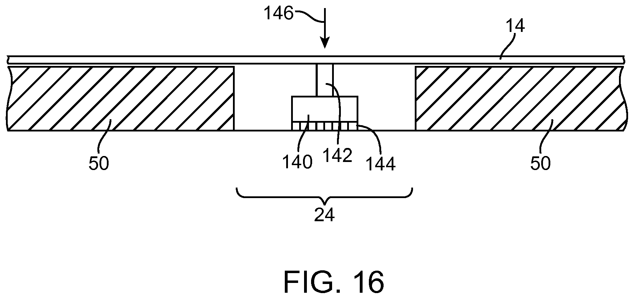

FIG. 16 is a cross-sectional side view of a portion of device 10 in the vicinity of another illustrative embodiment of internal interface component 24. In the embodiment shown in FIG. 16, interface component 24 may be a pressure sensor that includes a pressure sensing module 140. Pressure sensing module 140 may be coupled between a contact member such as contact member 142 (which is in contact with flexible display 14) and electrical contacts 144. Pressure may be exerted on flexible display 14 (e.g., by a user of device 10 or due to atmospheric pressure changes in the surrounding environment of device 10). Pressure exerted on flexible display 14 may be transmitted to pressure sensing module 140 by contact member 142. Pressure information may be transmitted to device 10 through electrical contacts 144. Pressure sensing module 140 may sense pressure changes using piezoelectric, capacitive, inductive, resistive, optical or other mechanisms. Providing device 10 with flexible display 14 allows flexible display 14 to extend over interface component 24, increasing the area of active region 20A of flexible display 14. The presence of flexible display 14 over interface component 24 may also reduce the risk of moisture or dirt entering into the interior of device 10.

In accordance with an embodiment, an electronic device is provided that includes a flexible display and an internal component, where the flexible display may be deformed by an action external to the device and deformation of the flexible display creates a response from the internal component.

In accordance with another embodiment, the flexible display includes a flexible display layer and a touch-sensitive layer.

In accordance with another embodiment, the flexible display layer of the flexible display includes an active display region and the internal component is covered with a portion of the active display region of the flexible display.

In accordance with another embodiment, the internal component includes a button and deformation of the flexible display compresses the button.

In accordance with another embodiment, the flexible display further includes a rigid cover layer having at least one opening.

In accordance with another embodiment, the opening includes a hole in the rigid cover layer, the button further includes a button member in the opening, the button member moves within the hole in the rigid cover layer, and the movement of the button member in the opening causes deformation of the flexible display.

In accordance with another embodiment, the internal component includes a pressure sensor and deformation of the flexible display exerts a mechanical pressure on the pressure sensor.

In accordance with another embodiment, the pressure sensor includes a piezoelectric actuator and the mechanical pressure induces a voltage on the piezoelectric actuator.

In accordance with another embodiment, the internal component includes a laser microphone for detecting a sound originating external to the electronic device and detecting the sound includes, with a laser, detecting deformation of the flexible display.

In accordance with an embodiment, an electronic device is provided that includes a flexible display and an audio component that transmits or receives sound through the flexible display.

In accordance with another embodiment, the flexible display includes an active display region and the audio component is mounted behind the active display region of the flexible display.

In accordance with another embodiment, the flexible display includes a flexible display layer and a touch-sensitive layer.

In accordance with another embodiment, the audio component includes a diaphragm and the diaphragm is mounted in contact with the flexible display.

In accordance with another embodiment, an electronic device is provides that includes a housing, a flexible display mounted on the housing, and a first internal component mounted under a portion of the flexible display, where the first internal component is configured to deform the portion of the flexible display.

In accordance with another embodiment, the first internal component includes a piezoelectric actuator, where a voltage applied to the piezoelectric actuator causes an expansion of the piezoelectric actuator and the portion of the flexible display deforms in response to the expansion of the piezoelectric actuator.

In accordance with another embodiment, the first internal component includes a structural component, where the portion of the flexible display deforms in response to physical contact with the structural component and deformation of the portion of the flexible display causes the portion of the flexible display to conform to a surface of the structural component.

In accordance with another embodiment, the electronic device further includes a second internal component mounted under the portion of the flexible display, where the portion of the flexible display that conforms to the surface of the structural component indicates the location of the second internal component.

In accordance with another embodiment, the second internal component includes a button, where the portion of the flexible display is configured to be further deformed by an action external to the electronic device and further deformation of the portion of the flexible display compresses the button.

In accordance with another embodiment, the first internal component further includes an actuator, where the structural component is mounted on the actuator, where raising the actuator moves the structural component into contact with the portion of the flexible display, and where lowering the actuator moves the structural component out of contact with the flexible display.

In accordance with another embodiment, the flexible display includes a touch-sensitive layer, where deformation of the portion of the flexible display conforming to the surface of the structural component indicates the location of a portion of the touch-sensitive layer of the flexible display.

In accordance with another embodiment, the electronic device further includes a second internal component mounted on the actuator and deformation of the portion of the flexible display conforming to the surface of the structural component indicates the location of the second internal component.

In accordance with another embodiment, the electronic device further includes a cover member and an actuator switch coupled to the actuator, where deformation of the flexible display exerts a pressure on the cover member and the pressure on the cover member lifts the cover member.

The foregoing is merely illustrative of the principles of this invention and various modifications can be made by those skilled in the art without departing from the scope and spirit of the invention.

As shown in the examples of FIGS. 1, 2 and 17-21, an electronic device may be provided with a concave display. The concave display may include a flexible display layer that has been bent to curve the display.

Concave displays may be formed from flexible layers such as a flexible display layer (e.g., a flexible organic light-emitting diode array), a flexible touch-sensitive layer (e.g., a sheet of polymer with an array of transparent capacitor electrodes for a capacitive touch sensor), a flexible substrate layer, etc. These flexible layers may, if desired, be covered by a flexible or rigid cover layer (sometimes referred to as a cover glass) or may be supported by a support structure (e.g., a rigid support structure on the underside of the flexible layers). In electronic devices with concave displays that are covered by rigid cover layers, the cover layers may be provided with openings that provide access to the flexible layers of the display. For example, a cover glass layer may have an opening that allows a button member to move relative to the cover glass layer. As the button member moves within the opening, underlying portions of the flexible display may be deformed (e.g., to allow actuation of an associated switch).

Electronic devices may also be provided with user interface components (input-output components) such as buttons, microphones, speakers, piezoelectric actuators or (for receiving electrical input from a user or tactile feedback to users), other actuators such as vibrators, pressure sensors, and other components. These components may be mounted under portions of a flexible display.

User interface components may be mounted under the flexible display or may be integrated into the flexible display. The deformable nature of the flexible display may allow a user to interact with the user interface components (input-output components) by moving the display into contact with the user interface components or by otherwise allowing the display to locally flex (e.g., to allow sound to pass through the flexible display or to allow barometric pressure measurements of the exterior environment to be made by an internal pressure sensor). If desired, a portion of the flexible display may form a membrane portion of an electrical component. Components that may be provided with a membrane that is formed from a portion of a flexible display include microphones, laser microphones, pressure sensors, speakers, etc.

Concave displays formed from flexible and rigid layers that all have concave shapes (i.e., displays formed from a collection of layers in which no layer of the display is planar) may provide reduced vulnerability to damage during a drop event in which an electronic device strikes the ground or other external objects while maximizing the internal volume of the device that is available to hold electrical and mechanical device components.

An illustrative electronic device of the type that may be provided with a concave display is shown in FIG. 1. Electronic device 10 may be a portable electronic device or other suitable electronic device. For example, electronic device 10 may be a laptop computer, a tablet computer, a somewhat smaller device such as a wrist-watch device, pendant device, or other wearable or miniature device, a cellular telephone, a media player, etc.

Device 10 may include a housing such as housing 12. Housing 12, which may sometimes be referred to as a case, may be formed of plastic, glass, ceramics, fiber composites, metal (e.g., stainless steel, aluminum, etc.), other suitable materials, or a combination of these materials. In some situations, parts of housing 12 may be formed from dielectric or other low-conductivity material. In other situations, housing 12 or at least some of the structures that make up housing 12 may be formed from metal elements.

Device 10 may have a concave display such as concave display 14. Concave display 14 may be formed from multiple layers of material. These layers may include a touch sensor layer such as a layer on which a pattern of indium tin oxide (ITO) electrodes or other suitable transparent electrodes have been deposited to form a capacitive touch sensor array or a touch sensor layer formed using other touch technologies (e.g., resistive touch, acoustic touch, optical touch, etc.). These layers may also include a layer that contains an array of display pixels. The touch sensor layer and the display layer may be formed using flexible sheets of polymer or other substrates having thicknesses of 10 microns to 0.5 mm or other suitable thicknesses (as an example).

The display pixel array may be, for example, an organic light-emitting diode (OLED) array containing rows and columns of OLED display pixels. Other types of flexible display pixel arrays may also be formed (e.g., electronic ink displays, etc.). The use of OLED technology to form flexible display 14 is sometimes described herein as an example. This is, however, merely illustrative. Flexible display 14 may be formed using any suitable flexible display technology. The use of flexible displays that are based on OLED technology is merely illustrative.

In addition to these functional display layers (i.e., the OLED array and the optional touch sensor array), display 14 may include one or more structural layers. For example, display 14 may be covered with a flexible or rigid cover layer and/or may be mounted on a support structure (e.g., a rigid support). Layers of adhesive may be used in attaching flexible display layers to each other and may be used in mounting flexible display layers to rigid and flexible structural layers.

In configurations for display 14 in which the cover layer for display 14 is flexible, input-output components that rely on the presence of flexible layers may be mounted at any suitable location under the display (e.g., along peripheral portions of the display, in a central portion of the display, etc.). In configurations for display 14 in which the flexible layers are covered by a rigid cover glass layer or other rigid cover layer, the rigid layer may be provided with one or more openings and the electronic components may be mounted under the openings. For example, a rigid cover layer may have openings such as a circular opening 16 for button 17 and a speaker port opening such as speaker port opening 18 (e.g., for an ear speaker for a user). Device 10 may also have other openings (e.g., openings in display 14 and/or housing 12 for accommodating volume buttons, ringer buttons, sleep buttons, and other buttons, openings for an audio jack, data port connectors, removable media slots, etc.).

In some embodiments, portions of concave display 14 such as peripheral regions 20I may be inactive and portions of display 14 such as rectangular central portion 20A (bounded by dashed line 20) may correspond to the active part of display 14. In active display region 20A, an array of image pixels may be used to present text and images to a user of device 10. In active region 20A, display 14 may include touch sensitive components for input and interaction with a user of device 10. If desired, regions such as regions 20I and 20A in FIG. 1 may both be provided with display pixels (i.e., all or substantially all of the entire front planar surface of a device such as device 10 may be covered with display pixels).

Device 10 may, if desired, have internal user interface components such as buttons 17 or speaker component 19 that occupy openings such as openings 16 and 18 respectively in an optional rigid cover layer of concave display 14. Buttons 17 may be based on dome switches or other switch circuitry. Buttons 17 may include button members that form push buttons (e.g., momentary buttons), slider switches, rocker switches, etc. Device 10 may include internal structural components such as structural component 22 that add a raised structure to a portion of concave display 14. Device 10 may include components such as interface components 24 and 26 that may be fully internal to device 10, but that receive input from the user or from the surrounding environment through physical interaction with concave display 14. Interface components 22, 24, and 26 may be positioned in active region 20A or inactive region 20I of concave display 14. Interface components 22, 24, and 26 may be positioned separately from one another or may be commonly located to form a combined component with structural and internal features. Interface components 24 and 26 may be positioned underneath concave display 14 so that concave display 14 must be deformed in order to contact components 24 or 26 or, if desired may be positioned to remain in constant contact with concave display 14.

An exploded perspective view of an illustrative display is shown in FIG. 2. As shown in FIG. 2, concave display 14 may be formed by stacking multiple layers including flexible display layer 14A, touch-sensitive layer 14B, and cover layer 14C. Display 14 may also include other layers of material such as adhesive layers, optical films, or other suitable layers. Flexible display layer 14 may include image pixels formed form light-emitting diodes (LEDs), organic LEDs (OLEDs), plasma cells, electronic ink elements, liquid crystal display (LCD) components, or other suitable image pixel structures compatible with flexible displays.

Touch-sensitive layer 14B may incorporate capacitive touch electrodes such as horizontal transparent electrodes 32 and vertical transparent electrodes 34. Touch-sensitive layer 14B may, in general, be configured to detect the location of one or more touches or near touches on touch-sensitive layer 14B based on capacitive sensors, resistive sensors, optical sensors, acoustic sensors, inductive sensors, or force sensors.

Software and/or hardware may be used to process the measurements of the detected touches to identify and track one or more gestures. A gesture may correspond to stationary or non-stationary, single or multiple, touches or near touches on touch-sensitive layer 14B. A gesture may be performed by moving one or more fingers or other objects in a particular manner on touch-sensitive layer 14B such as tapping, pressing, rocking, scrubbing, twisting, changing orientation, pressing with varying pressure and the like at essentially the same time, contiguously, or consecutively. A gesture may be characterized by, but is not limited to a pinching, sliding, swiping, rotating, flexing, dragging, or tapping motion between or with any other finger or fingers. A single gesture may be performed with one or more hands, by one or more users, or any combination thereof.

Cover layer 14C may be formed from plastic or glass (sometimes referred to as display cover glass) and may be flexible or rigid. If desired, the interior surface of peripheral inactive portions 20I of cover layer 14C may be provided with an opaque masking layer on such as black ink.

Touch-sensitive flexible display section 14AB may be formed from display pixel array layer 14A and optional touch sensor layer 14B.

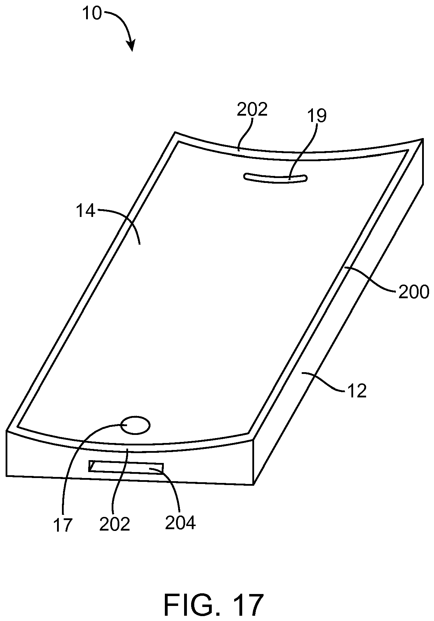

FIG. 17 is perspective view of an illustrative embodiment of device 10 with concave display 14 in which device 10 is provided with a bezel such as bezel 200 surrounding the periphery of concave display 14. In the illustrative embodiment shown in FIG. 17, housing 12 of device 10 has an opening 204 that may provide access to a data port. The surface of bezel 200 may be formed in-plane with the surface of display 14 (i.e., so that bezel 200 and display 14 form a single smooth surface) or may be formed at a right angle to the walls of housing 12 (as examples). Bezel 200 may be a separate bezel member or may be formed as a portion of housing 12. As shown in FIG. 17, top and bottom portions 202 of bezel 200 may have a concave (curved) shape that matches the cross-sectional curved shape of concave display 14.

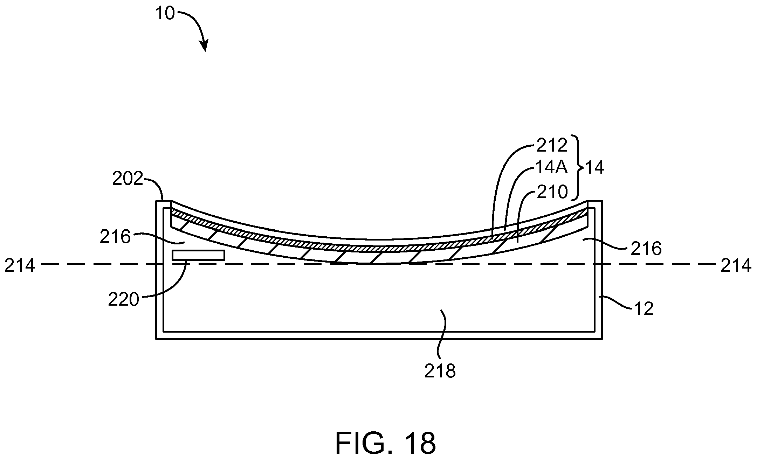

FIG. 18 is a cross-sectional side view of an illustrative embodiment of device 10 in which concave display 14 is formed by mounting flexible display layer 14A to a concave support structure such as support structure 210 (e.g., a rigid support structure having at least a concave external surface such as a metal, glass, or plastic support structure) using a layer of adhesive material such as adhesive layer 212. As shown in FIG. 18, the internal volume of device 10, defined by housing 12, bezel 202 and concave display 14 may include volume 216 above a plane (indicated by dashed line 214) defined by the deepest point in the curvature of display 14. This is because the inner surface of support structure 210 is convex (in the FIG. 18 example). Volume 216 provides space in addition to rectangular volume 218 in which internal components such as component 220 (e.g., printed circuit boards, antennas or other components) may be positioned. The ability to bend flexible display 14 into the concave shape of FIG. 18 may therefore help maximize the interior space that is available within device 10 to mount device components.

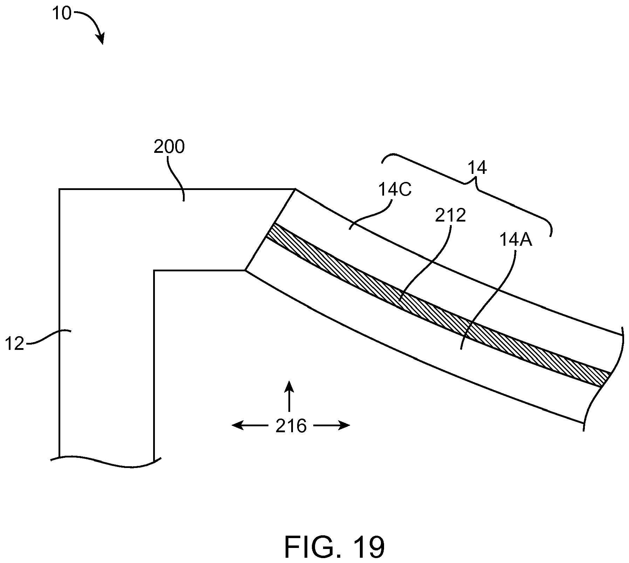

FIG. 19 is a cross-sectional side view of a portion of device 10. In the illustrative embodiment of FIG. 19, concave display 14 is formed from flexible display layer 14A, adhesive layer 212, and rigid cover layer 14C (e.g., a layer of rigid plastic or a layer of rigid cover glass having a concave external surface and a convex inner surface to which flexible display layer 14A conforms). Concave display 14 may be formed adjacent to bezel portion 200 of housing 12 or may be joined to housing 12 by an additional mounting member. The concave shape of cover layer 14C of display 14 may provide reduced susceptibility to damage if device 10 is dropped. Forming flexible display layer 14A in a shape that matches the concave shape of cover layer 14C (i.e., so that layer 14A conforms to the convex inner surface of layer 14C) may provide additional internal volume 216 to device 10.

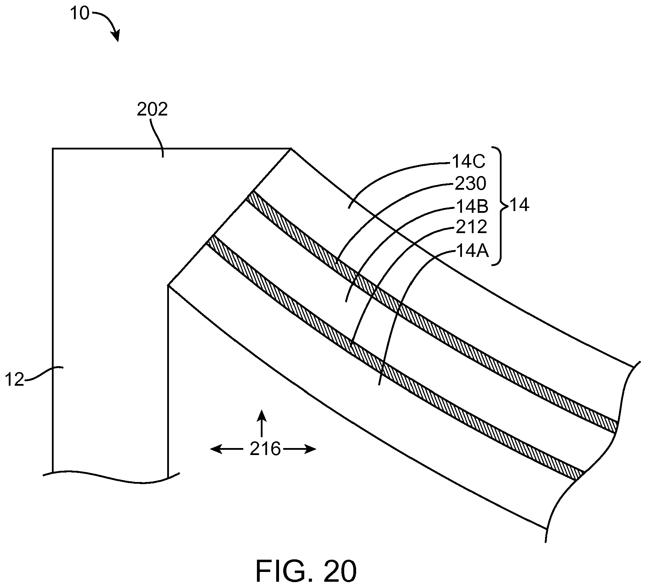

FIG. 20 is a cross-sectional side view of a portion of another embodiment of device 10. In the illustrative embodiment of FIG. 20, concave display 14 is formed from flexible display layer 14A attached to optional touch-sensitive layer 14B by adhesive layer 212. Touch-sensitive layer 14B may further be attached to rigid cover layer 14C (e.g., a glass or plastic layer) using adhesive layer 230 such that all layers (212, 14B, 230, and 14C) of display 14 conform to the concave shape of cover layer 14C. Concave display 14 may be directly adjacent to bezel portion 200 of housing 12 or may be joined to housing 212 by an additional mounting member. The concave shape of all layers (14A, 212, 14B, 230, and 14C) of display 14 may provide reduced susceptibility to damage in the event that device 10 is dropped and may provide additional internal volume 216.

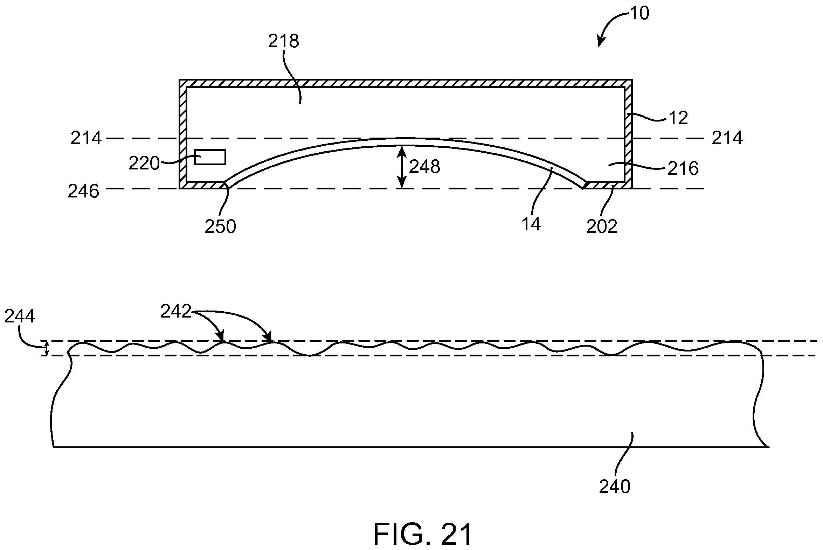

FIG. 21 is a cross-sectional side view of device 10 and a common drop surface such as drop surface 240 (e.g., sidewalk concrete, asphalt, tile, or any other surface) on which device 10 may be dropped. Drop surface 240 may have a surface roughness due to surface features such as surface features 242. Surface features 242 may have a characteristic height such as height 244 (e.g., 1-2 mm for a concrete surface). As shown in FIG. 21, device 10 may be provided with concave display 14. Concave display 14 may be provided with a curvature defined by maximum depth 248 defined by the distance from the outermost surface of device 10, indicated by dashed line 246 and the deepest point in the curvature of display 14 (indicated by dashed line 214). The outermost surface of device 10 may be defined by bezel 200, or, in the absence of bezel 200, may be defined by juncture point 250 at which the peripheral edges of display 14 meet housing 12.

Maximum depth 248 may be chosen to be larger than characteristic size 244 of surface features 242 of common drop surface 240. Providing device 10 with a concave display having curvature chosen to provide a maximum depth (depth 248) that is larger than characteristic height 244 may significantly reduce the risk of damage (e.g., scratches or other damage) to device 10 during a drop event.

Providing concave display 14 with flexible display layer 14A capable of conforming to the shape of cover layer 14C allows all layers of display 14 to be conformed to same concave shape. Providing device 10 with concave display 14 in which all layers of concave display 14 conform to the same concave shape may reduce the susceptibility of device 10 to damage when dropped on common drop surface 240 while providing additional internal volume 216 in which internal components may be positioned.

Electronic devices may be provided with concave displays that reduce the risk of damage in the event of a drop while maximizing the internal volume of the device. Concave displays may be formed from one or more flexible layers including a flexible display layer. The flexible display layer may be mounted to a rigid support structure or a rigid cover layer. Flexible display layers that conform to the curved shape of a rigid cover structure provide additional internal volume in which internal components of the device may be positioned.

In accordance with an embodiment, an electronic device is provided that includes a housing and a concave display mounted in the housing, where the concave display has a rigid internal support structure having a concave surface and a flexible display layer attached to the rigid internal support structure that conforms to the concave surface of the rigid support structure.

In accordance with another embodiment, the concave display further includes a first adhesive layer and the first adhesive layer attaches the flexible display layer to the concave surface of the rigid internal support structure.

In accordance with another embodiment, the concave display further includes a touch-sensitive layer.

In accordance with another embodiment, the concave display further includes first and second adhesive layers, where the first adhesive layer attaches the flexible display layer to the touch-sensitive layer and where the second adhesive layer attaches the flexible display layer to the rigid internal support structure.

In accordance with another embodiment, the housing includes a bezel and the bezel surrounds a periphery of the concave display.

In accordance with another embodiment, the rigid internal support structure has a convex inner surface and the electronic device further includes at least one internal component mounted adjacent to the convex inner surface.

In accordance with another embodiment, the rigid internal support structure has at least one opening.

In accordance with another embodiment, the at least one opening includes a hole in the rigid internal support structure and the at least one internal component is mounted in the hole in the rigid internal support structure.

In accordance with another embodiment, an electronic device is provided that includes a housing and a concave display mounted in the housing, where the concave display includes a rigid cover layer having at least one concave outer surface and at least one corresponding convex inner surface and includes a flexible display layer, where the flexible display layer conforms to the convex inner surface of the rigid cover layer.

In accordance with another embodiment, the flexible display layer includes image pixels formed from organic light-emitting diodes.

In accordance with another embodiment, the concave display further includes a first adhesive layer, where the first adhesive layer attaches the flexible display layer to the convex inner surface of the rigid cover layer.

In accordance with another embodiment, the rigid cover layer has at least one opening, where the electronic device further includes an internal component and where the internal component is mounted adjacent to the flexible display layer under the at least one opening in the rigid cover layer.

In accordance with another embodiment, the internal component includes a speaker and the speaker transmits sound through the flexible display layer.

In accordance with another embodiment, the internal component includes a button, where the electronic device further includes a button member in the at least one opening in the rigid cover layer, where the button member moves within the at least one opening in the rigid cover layer, and where the movement of the button member compresses the button.

In accordance with another embodiment, an electronic device is provided that includes an electronic device housing and a concave display mounted in the electronic device housing, where the concave display includes a rigid cover layer having a concave outer surface and a convex inner surface, a flexible display layer, and a touch-sensitive layer, where the flexible display layer and the touch-sensitive layer each conform to the convex inner surface of the rigid cover layer.

In accordance with another embodiment, the concave display further includes first and second adhesive layers, where the flexible display layer is attached to the touch-sensitive layer with the first adhesive layer and where the touch-sensitive layer is attached to the convex inner surface of the rigid cover layer with the second adhesive layer.

In accordance with another embodiment, the electronic device further includes at least one internal component mounted adjacent to the flexible display layer of the concave display.

In accordance with another embodiment, the rigid cover layer of the convex display has at least one opening, where the at least one internal component is an audio component, and where the audio component is mounted under the at least one opening in the rigid cover layer.

In accordance with another embodiment, the concave outer surface of the concave display has a curvature and peripheral edges, where the curvature has a deepest point, where the deepest point and at least some of the peripheral edges define a maximum depth associated with the curvature of the concave display and where the maximum depth of the concave display is between 0.5 millimeter and 20 millimeters.

In accordance with another embodiment, the electronic device further includes an internal component, where the internal component is mounted at a distance from the peripheral edges of the concave outer surface, and where the distance is smaller than the maximum depth.

The foregoing is merely illustrative of the principles of this invention and various modifications can be made by those skilled in the art without departing from the scope and spirit of the invention.

As shown in the examples of FIGS. 1, 2 and 22-29, an electronic device may be provided with a convex display. The convex display may include a flexible display layer that has been bent to form a curved surface.

Convex displays may be formed from flexible layers such as a flexible display layer (e.g., a flexible organic light-emitting diode array), a flexible touch-sensitive layer (e.g., a sheet of polymer with an array of transparent capacitor electrodes for a capacitive touch sensor), a flexible substrate layer, etc. These flexible layers may, if desired, be covered by a flexible or rigid cover layer (sometimes referred to as a cover glass) or may be supported by a support structure (e.g., a rigid support structure on the underside of the flexible layers). In electronic devices with convex displays partially covered by rigid cover layers, the cover layers may be provided with openings that provide access to the flexible layers of the display. For example, a cover glass layer may have an opening that allows a button member to move relative to the cover glass layer. As the button member moves within the opening, underlying portions of the flexible display may be deformed (e.g., to allow actuation of an associated switch).

Electronic devices may also be provided with user interface components (input-output components) such as buttons, microphones, speakers, piezoelectric actuators or (for receiving electrical input from a user or tactile feedback to users), other actuators such as vibrators, pressure sensors, and other components. These components may be mounted under portions of a flexible display.

User interface components may be mounted under the flexible display or may be integrated into the flexible display. The deformable nature of the flexible display may allow a user to interact with the user interface components (input-output components) by moving the display into contact with the user interface components or by otherwise allowing the display to locally flex (e.g., to allow sound to pass through the flexible display or to allow a barometric pressure measurements of the exterior environment to be made by an internal pressure sensor). If desired, a portion of the flexible display may form a membrane portion of an electrical component. Components that may be provided with a membrane that is formed from a portion of a flexible display include microphones, laser microphones, pressure sensors, speakers, etc.

Convex displays formed from flexible and rigid layers that all have convex shapes i.e., displays formed from a collection of layers in which no layer of the display is planar) may provide an aesthetically desirable external appearance while maximizing the internal volume of the device that is available to hold electrical and mechanical device components.

An illustrative electronic device of the type that may be provided with a convex display is shown in FIG. 1.
Electronic device 10 may be a portable electronic device or other suitable electronic device. For example, electronic device 10 may be a laptop computer, a tablet computer, a somewhat smaller device such as a wrist-watch device, pendant device, or other wearable or miniature device, a cellular telephone, a media player, etc.

Device 10 may include a housing such as housing 12. Housing 12, which may sometimes be referred to as a case, may be formed of plastic, glass, ceramics, fiber composites, metal (e.g., stainless steel, aluminum, etc.), other suitable materials, or a combination of these materials. In some situations, parts of housing 12 may be formed from dielectric or other low-conductivity material. In other situations, housing 12 or at least some of the structures that make up housing 12 may be formed from metal elements.

Device 10 may have a convex display such as convex display 14. Convex display 14 may be formed from multiple layers of material. These layers may include a touch sensor layer such as a layer on which a pattern of indium tin oxide (ITO) electrodes or other suitable transparent electrodes have been deposited to form a capacitive touch sensor array or a touch sensor layer formed using other touch technologies (e.g., resistive touch, acoustic touch, optical touch, etc.). These layers may also include layer that contains an array of display pixels. The touch sensor layer and the display layer may be formed using flexible sheets of polymer or other substrates having thicknesses of 10 microns to 0.5 mm or other suitable thicknesses (as an example).

The display pixel array may be, for example, an organic light-emitting diode (OLED) array containing rows and columns of OLED display pixels. Other types of flexible display pixel arrays may also be formed (e.g., electronic ink displays, etc.). The use of OLED technology to form flexible display 14 is sometimes described herein as an example. This is, however, merely illustrative. Flexible display 14 may be formed using any suitable flexible display technology. The use of flexible displays that are based on OLED technology is merely illustrative.

In addition to these functional display layers (i.e., the OLED array and the optional touch sensor array), display 14 may include one or more structural layers. For example, display 14 may be covered with a flexible or rigid cover layer and/or may be mounted on a support structure (e.g., a rigid support). Layers of adhesive may be used in attaching flexible display layers to each other and may be used in mounting flexible display layers to rigid and flexible structural layers.

In configurations for display 14 in which the cover layer for display 14 is flexible, input-output components that rely on the presence of flexible layers may be mounted at any suitable location under the display (e.g., along peripheral portions of the display, in a central portion of the display, etc.). In configurations for display 14 in which the flexible layers are covered by a rigid cover glass layer or other rigid cover layer, the rigid layer may be provided with one or more openings and the electronic components may be mounted under the openings. For example, a rigid cover layer may have openings such as a circular opening 16 for button 17 and a speaker port opening such as speaker port opening 18 (e.g., for an ear speaker for a user). Device 10 may also have other openings (e.g., openings in display 14 and/or housing 12 for accommodating volume buttons, ringer buttons, sleep buttons, and other buttons, openings for an audio jack, data port connectors, removable media slots, etc.).

In some embodiments, portions of convex display 14 such as peripheral regions 20I may be inactive and portions of display 14 such as rectangular central portion 20A (bounded by dashed line 20) may correspond to the active part of display 14. In active display region 20A, an array of image pixels may be used to present text and images to a user of device 10. In active region 20A, display 14 may include touch sensitive components for input and interaction with a user of device 10. If desired, regions such as regions 20I and 20A in FIG. 1 may both be provided with display pixels (i.e., all or substantially all of the entire front planar surface of a device such as device 10 may be covered with display pixels).

Device 10 may, if desired, have internal user interface components such as buttons 17 or speaker component 19 that occupy openings such as openings 16 and 18 respectively in an optional rigid cover layer of convex display 14. Buttons 17 may be based on dome switches or other switch circuitry. Buttons 17 may include button members that form push buttons (e.g., momentary buttons), slider switches, rocker switches, etc. Device 10 may include internal structural components such as structural component 22 that add a raised structure to a portion of convex display 14. Device 10 may include components such as interface components 24 and 26 that may be fully internal to device 10, but that receive input from the user or from the surrounding environment through physical interaction with convex display 14. Interface components 22, 24, and 26 may be positioned in active region 20A or inactive region 20I of convex display 14. Interface components 22, 24, and 26 may be positioned separately from one another or may be commonly located to form a combined component with structural and internal features. Interface components 24 and 26 may be positioned underneath convex display 14 so that convex display 14 must be deformed in order to contact components 24 or 26 or, if desired may be positioned to remain in constant contact with convex display 14.

An exploded perspective view of an illustrative display is shown in FIG. 2. As shown in FIG. 2, convex display 14 may be formed by stacking multiple layers including flexible display layer 14A, touch-sensitive layer 14B, and cover layer 14C. Display 14 may also include other layers of material such as adhesive layers, optical films, or other suitable layers. Flexible display layer 14 may include image pixels formed form light-emitting diodes (LEDs), organic LEDs (OLEDs), plasma cells, electronic ink elements, liquid crystal display (LCD) components, or other suitable image pixel structures compatible with flexible displays.

Touch-sensitive layer 14B may incorporate capacitive touch electrodes such as horizontal transparent electrodes 32 and vertical transparent electrodes 34. Touch-sensitive layer 14B may, in general, be configured to detect the location of one or more touches or near touches on touch-sensitive layer 14B based on capacitive sensors, resistive sensors, optical sensors, acoustic sensors, inductive sensors, or force sensors.

Software and/or hardware may be used to process the measurements of the detected touches to identify and track one or more gestures. A gesture may correspond to stationary or non-stationary, single or multiple, touches or near touches on touch-sensitive layer 14B. A gesture may be performed by moving one or more fingers or other objects in a particular manner on touch-sensitive layer 14B such as tapping, pressing, rocking, scrubbing, twisting, changing orientation, pressing with varying pressure and the like at essentially the same time, contiguously, or consecutively. A gesture may be characterized by, but is not limited to a pinching, sliding, swiping, rotating, flexing, dragging, or tapping motion between or with any other finger or fingers. A single gesture may be performed with one or more hands, by one or more users, or any combination thereof.

Cover layer 14C may be formed from plastic or glass (sometimes referred to as display cover glass) and may be flexible or rigid. If desired, the interior surface of peripheral inactive portions 20I of cover layer 14C may be provided with an opaque masking layer on such as black ink.

Touch-sensitive flexible display section 14AB may be formed from display pixel array layer 14A and optional touch sensor layer 14B.

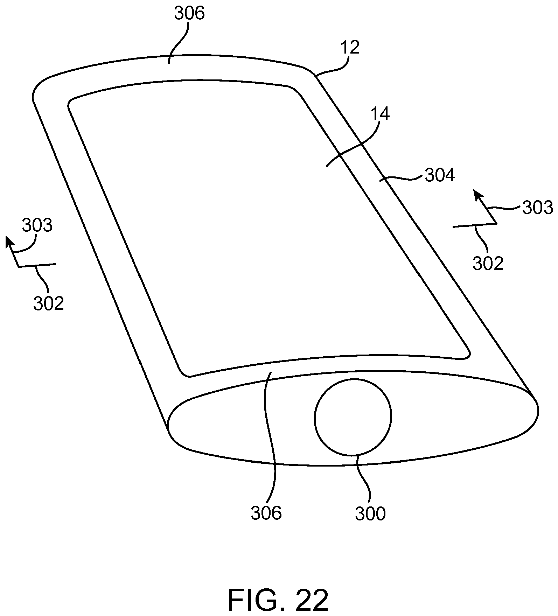

FIG. 22 is perspective view of an exemplary embodiment of device 10 with convex display 14 and convex housing 12 in which housing 12 has an opening 300 that may provide access to, e.g., an audio port. A portion of housing 12 may form a bezel such as bezel 304. Bezel 304 may be formed so that bezel 304 and display 14 form a common smooth surface or may be formed raised above or depressed below the outer surface of display 14. Bezel 304 may be a separate bezel member or may be formed as a portion of housing 12. As shown in FIG. 22, top and bottom portions 306 of bezel 200 may have a convex (curved) shape that matches the cross-sectional curved shape of convex display 14.

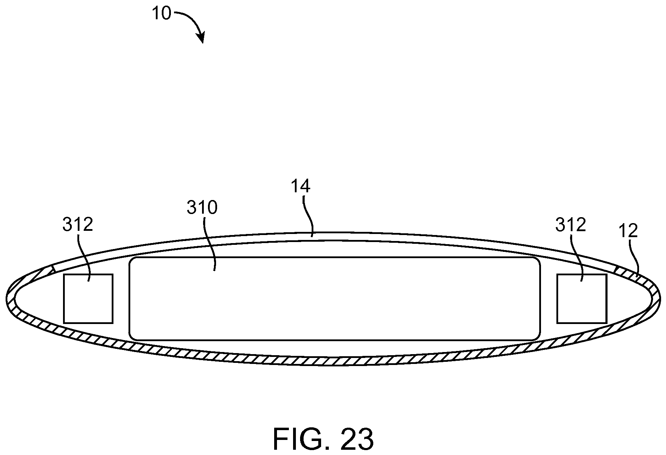

FIG. 23 is a cross-sectional side view of an illustrative embodiment of device 10 taken along line 302 of FIG. 22 and viewed in direction 303. As shown in FIG. 23, device 10 has a convex shape formed by convex housing 12 and convex display 14. Device 10 may also include internal components such as battery 310 and components 312. The convex shape of housing 12 and display 14 of device 10 may provide device 10 with a thin appearance while providing an interior space that is able to accommodate internal components such as battery 310.

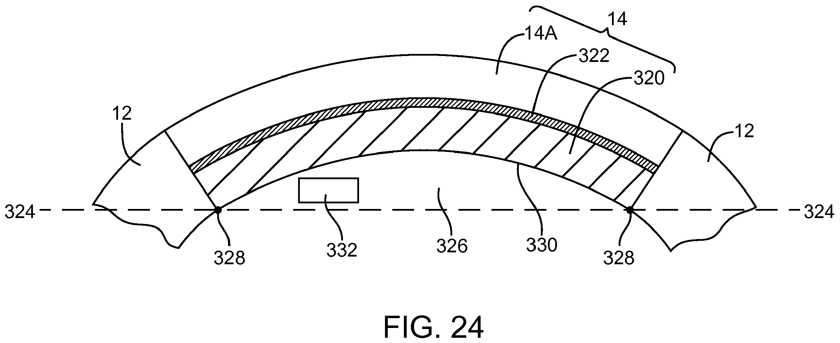

FIG. 24 is a cross-sectional side view of an illustrative embodiment of device 10 in which convex display 14 is formed by mounting flexible display layer 14A to a convex support structure such as support structure 320 (e.g., a rigid support structure having at least a convex external surface such as a metal, glass, or plastic support structure) using a layer of adhesive material such as adhesive layer 322. As shown in FIG. 24, the internal volume of device 10, defined by housing 12 and convex display 14 may include volume 326 above plane 324 (defined by inner edges 328 of display 14) and below inner surface 330 of display 14. This is because inner surface 330 of support structure 320 is concave (in the FIG. 24 example). Volume 326 provides space which may be used for placement of internal components such as component 332 (e.g., printed circuit boards, antennas or other components). The ability to bend flexible display layer 14A into the convex shape of FIG. 24 that matches the convex outer surface of support structure 320 may therefore help maximize the interior space that is available within device 10 to mount device components.

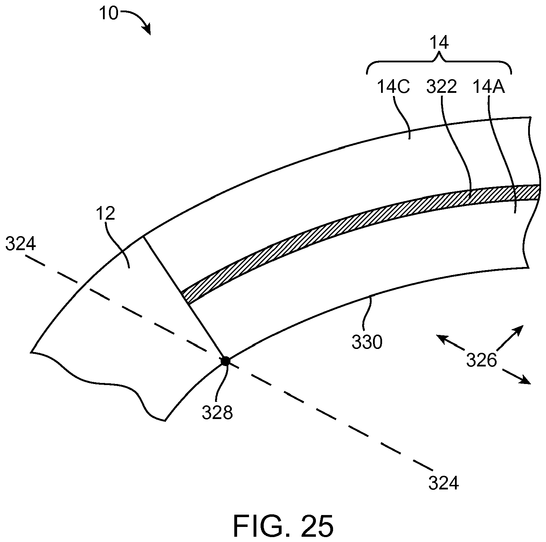

FIG. 25 is a cross-sectional side view of a portion of device 10. In the illustrative embodiment of FIG. 25, convex display 14 is formed from flexible display layer 14A, adhesive layer 322, and rigid cover layer 14C (e.g., a layer of rigid plastic or a layer of rigid cover glass having a convex external surface and a concave inner surface to which flexible display layer 14A conforms). Convex display 14 may be formed adjacent to bezel portion housing 12 or may be joined to housing 12 by an additional mounting member. Providing device 10 with a layer such as flexible display layer 14A that conforms to the convex shape of cover layer 14C (i.e., so that layer 14A conforms to the concave inner surface of layer 14C) may provide additional internal volume 326 between plane 324 (defined by inner edges 328 of display 14) and inner surface 330 of display 14.

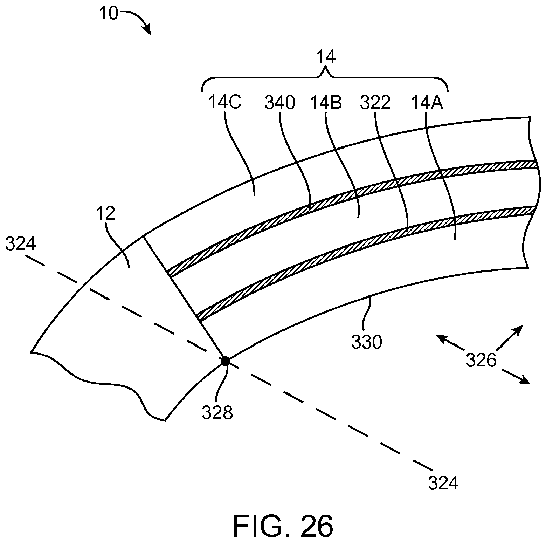

FIG. 26 is a cross-sectional side view of a portion of another embodiment of device 10. In the illustrative embodiment of FIG. 26, convex display 14 is formed from flexible display layer 14A attached to optional touch-sensitive layer 14B by adhesive layer 322. Touch-sensitive layer 14B may further be attached to rigid cover layer 14C (e.g., a glass or plastic layer) using adhesive layer 340 such that all layers (322, 14B, 340, and 14C) of display 14 conform to the convex shape of cover layer 14C (i.e., so that layers 14A and 14B conform to the concave inner surface of cover layer 14C). Convex display 14 may be formed adjacent to housing 12 or may be joined to housing 212 by an additional mounting member. The convex shape of all layers (14A, 322, 14B, 340, and 14C) may combine with convex housing 12 to provide a thin appearance for device 10 and may provide additional internal volume 326 between plane 324 (defined by inner edges 328 of display 14) and inner surface 330 of display 14.

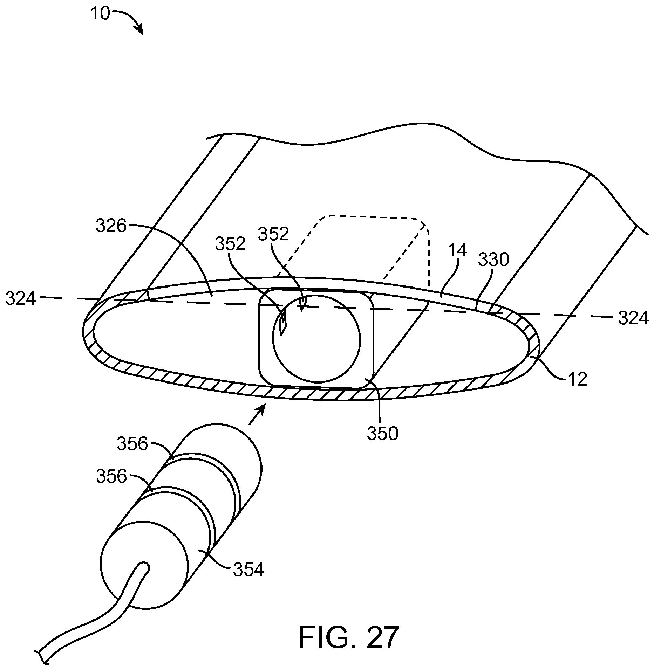

FIG. 27 is a cross-sectional perspective view of an illustrative electronic device 10 in the vicinity of a connecting structure such as connecting structure 350 (e.g. an audio port or other female connector). As shown in FIG. 27, audio port 350 may have electrical contacts 352 for mating with contacts 356 of a connector such as mating connector 354 (e.g., a mating audio plug or other male connector). In the embodiment of FIG. 27, a portion of audio port 350 may occupy a portion of internal volume 326 above plane 324 (defined by inner edges 328 of display 14). The convex shape of display 14 of device 10 may provide a thin appearance and may provide additional internal volume 326 between plane 324 (defined by inner edges 328 of display 14) and inner surface 330 of display 14 in which a portion of mating connectors such as connector 350 may be mounted.

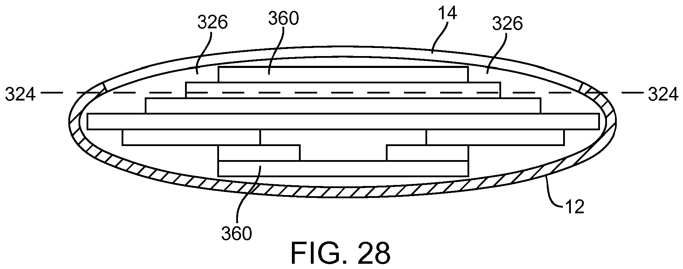

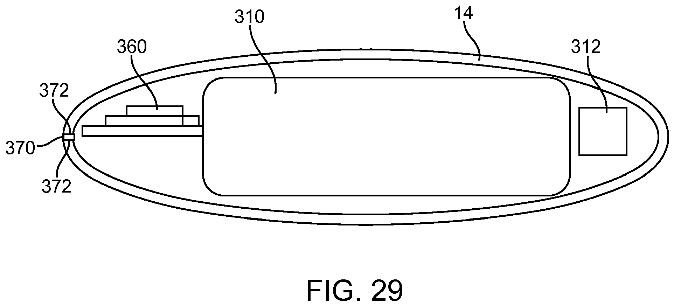

FIG. 28 is a cross-sectional side view of an illustrative electronic device 10 in the vicinity of a stack of components 360 such as printed circuit boards (PCBs), sensors, switches, connectors, battery structures, or other electronic components. In the embodiment shown in FIG. 28, some components 360 may be mounted partially or completely in a portion of internal volume 326 above plane 324 (defined by inner edges 328 of display 14). The convex shape of display 14 of device 10 may provide a thin appearance and may provide additional internal volume 326 between plane 324 (defined by inner edges 328 of display 14) and inner surface 330 of display 14 in which PCBs and other components 360 may be mounted. The example of FIG. 29 in which components 360 are mounted in volume 326 is merely illustrative. Other components or structures may occupy volume 326, if desired.

FIG. 29 is a cross-sectional side view of an illustrative electronic device in which display 14 of device 10 completely surrounds device 10. As shown in FIG. 29, device 10 may have convex front (upper) and rear (lower) surfaces that are joined along curved sidewalls. Display 14 may cover the front, rear, and sidewall surfaces of device 10 so as to completely surround electrical components 360 (e.g., printed circuit boards, integrated circuits, switches, sensors, etc.). Edges 372 may be joined by a joining member such as joining member 370. Member 370 may be a separate member formed of plastic, glass, ceramics, fiber composites, metal (e.g., stainless steel, aluminum, etc.), other suitable materials, or a combination of these materials, or may be formed from an adhesive material.

In the example of FIG. 29, display 14 may be formed by stacking multiple layers including flexible display layer 14A, touch-sensitive layer 14B, and cover layer 14C. Display 14 may also include other layers of material such as adhesive layers, optical films, or other suitable layers. As an example, display 14 may be formed by mounting flexible display layer 14A to a rigid convex support structure having one or more convex outer surfaces and one or more associated concave inner surfaces that completely surrounds device 10. In another configuration, display 14 may be formed from flexible display layer 14A, adhesive layer 322, and rigid cover layer 14C (e.g., a rigid cover layer with one or more convex outer surfaces and one or more associated concave inner surfaces). In another possible configuration, convex display 14 may be formed by attaching flexible display layer 14A to optional touch-sensitive layer 14B using adhesive layer 322. Touch-sensitive layer 14B may further be attached to rigid cover layer 14C (e.g., a glass or plastic layer) using adhesive layer 340 so that all layers (322, 14B, 340, and 14C) of display 14 conform to the convex shape of cover layer 14C. These examples are merely illustrative and other configurations of display 14 may be used.

The convex shape of display 14 of device 10 may provide a thin appearance for device 10 and may help to maximize the internal volume of the device in which components such as battery 310, PCBs 360 or other components such as component 312 may be mounted. Surrounding device 10 completely with convex display 14 may allow the area of a device available for visual display to be enlarged.

The foregoing is merely illustrative of the principles of this invention and various modifications can be made by those skilled in the art without departing from the scope and spirit of the invention.

Electronic devices may be provided with convex displays. A convex display may be used to maximize the internal volume of a device. Convex displays may be formed from one or more flexible layers. A flexible display layer may be mounted to a rigid support structure or a rigid cover layer. Flexible display layers that conform to the curved shape of a rigid structure may provide additional internal volume in which internal components of the device may be positioned.

In accordance with another embodiment, an electronic device is provided including a housing and a display mounted in the housing, where the display has a flexible display layer that conforms to a convex outer surface of a rigid support structure.

In accordance with another embodiment, the display further includes an adhesive layer and the adhesive layer attaches the flexible display layer to the convex outer surface of the rigid support structure.

In accordance with another embodiment, the display further includes a touch-sensitive layer.

In accordance with another embodiment, the display further includes first and second adhesive layers, where the first adhesive layer attaches the flexible display layer to the touch-sensitive layer and the second adhesive layer attaches the flexible display layer to the convex outer surface of the rigid support structure.

In accordance with another embodiment, the flexible display layer includes image pixels formed from organic light-emitting diodes.

In accordance with another embodiment, the housing has at least one opening, where the opening is associated with a connector port and the electronic device further includes a connector structure mounted in the connector port.

In accordance with another embodiment, an electronic device is provided that includes a housing and a display mounted in the housing, where the display includes a rigid cover layer having at least one convex outer surface and having at least one associated concave inner surface and includes a flexible display layer that conforms to the concave inner surface.

In accordance with another embodiment, the display further includes an adhesive layer and the adhesive layer bonds the flexible display layer to the concave inner surface of the rigid cover layer.

In accordance with another embodiment, the rigid cover layer includes glass.

In accordance with another embodiment, the flexible display layer includes image pixels formed from organic light-emitting diodes.

In accordance with another embodiment, the flexible display layer includes image pixels formed from organic light-emitting diodes.

In accordance with another embodiment, the display further includes a touch sensor layer that conforms to the concave inner surface.

In accordance with another embodiment, the concave display further includes first and second adhesive layers, where the first adhesive layer attaches the flexible display layer to the touch sensor layer and the second adhesive layer attaches the touch sensor layer to the concave inner surface of the display.

In accordance with another embodiment, the touch sensor layer includes indium-tin-oxide electrodes.

In accordance with another embodiment, the electronic device further includes an internal component, where the concave inner surface of the display provides an additional internal volume for the electronic device and where the internal component is mounted at least partially in the additional internal volume.

In accordance with another embodiment, an electronic device is provided having at least a front surface and a rear surface and including electronic components interposed between the front and rear surfaces and a display that substantially covers at least the front and rear surfaces and that surrounds the electronic components, where the display includes a rigid cover layer having at least one inner surface and a flexible display layer that is bent to conform to the inner surface.

In accordance with another embodiment, the display further includes a touch-sensitive layer attached to at least a portion of the flexible display layer.

In accordance with another embodiment, the inner surface includes a concave inner surface and the electronic device further includes a connector structure and a housing having an opening, where the connector structure is mounted in the opening to form a connector port.

In accordance with another embodiment, the electronic device has at least two sidewall surfaces and the display substantially covers the two sidewall surfaces.

In accordance with another embodiment, the display has at least two edges and the edges of the display are joined by a joining member.

The foregoing is merely illustrative of the principles of this invention and various modifications can be made by those skilled in the art without departing from the scope and spirit of the invention. The foregoing embodiments may be implemented individually or in any combination.

As shown in the examples of FIGS. 30-44, an electronic device may be provided with a flexible display and other user interface components. The user interface components may include buttons, switches, microphones, actuators such as solenoids, motors, and piezoelectric actuators, connector ports, touch screens, proximity sensors and other components for accepting input from, or transmitting information to, a user of the electronic device.

Flexible displays may be formed from flexible layers such as a flexible display layer (e.g., a flexible organic light-emitting diode array), a flexible touch-sensitive layer (e.g., a sheet of polymer with an array of transparent capacitor electrodes for a capacitive touch sensor), a flexible substrate layer, etc. These flexible layers may, if desired, be covered by a flexible or rigid cover layer (sometimes referred to as a cover glass) or may be supported by a support structure (e.g., a rigid support structure on the underside of the flexible layers). In electronic devices with flexible displays that are covered by rigid cover layers, the cover layers may be provided with openings that provide access to the flexible layers of the display in the vicinity of a user interface device. For example, a cover glass layer may have an opening that allows a button member to move relative to the cover glass layer. As another example, a cover glass layer may have one or more speaker openings through which sound may pass.

To maximize the area of the portion of the flexible display that is available for displaying visual information to the user, user interface components may be positioned behind, abutted against, or integrated into the flexible display. The deformable nature of the flexible display may allow a user to interact with the user interface components (input-output components) by moving the display into contact with the user interface components or by otherwise allowing the display to locally flex (e.g., to allow sound to pass through the flexible display or to allow barometric pressure measurements of the exterior environment to be made by an internal pressure sensor).

If desired, a portion of the flexible display may form a membrane structure for an electrical component. For example, a portion of the flexible display may form a speaker membrane for a speaker component. Components that may be provided with a membrane structure formed from a portion of a flexible display include speakers, microphones, laser microphones, pressure sensors, etc.

An illustrative electronic device of the type that may be provided with a flexible display is shown in FIG. 30. Electronic device 10 may be a computer such as a computer that is integrated into a display. For example, electronic device 10 may be a computer monitor, a laptop computer, a tablet computer, a somewhat smaller portable device such as a wrist-watch device, pendant device, or other wearable or miniature device, a cellular telephone, a media player, a tablet computer, a gaming device, a speaker device, a navigation device, a computer monitor, a television, or other electronic equipment.

Device 10 may include a housing such as housing 412. Housing 412, which may sometimes be referred to as a case, may be formed of plastic, glass, ceramics, fiber composites, metal (e.g., stainless steel, aluminum, etc.), other suitable materials, or a combination of these materials. In some situations, parts of housing 412 may be formed from dielectric or other low-conductivity material. In other situations, housing 412 or at least some of the structures that make up housing 412 may be formed from metal elements.

Housing 412 may be formed using a unibody configuration in which some or all of housing 412 is machined or molded as a single structure or may be formed using multiple structures (e.g., an internal frame structure, one or more structures that form exterior housing surfaces, etc.).

As shown in FIG. 30, housing 412 may have multiple parts. For example, housing 412 may have upper portion 412A and lower portion 412B. Upper portion 412A may be coupled to lower portion 412B using a hinge that allows portion 412A to rotate about rotational axis 416 relative to portion 412B. A keyboard such as keyboard 418 and a touch pad such as touch pad 420 may be mounted in housing portion 412B.

Device 10 may have a flexible display such as flexible display 414. Flexible display 414 may be formed from multiple layers of material. These layers may include a touch sensor layer such as a layer on which a pattern of indium tin oxide (ITO) electrodes or other suitable transparent electrodes have been deposited to form a capacitive touch sensor array. These layers may also include a display layer that contains an array of display pixels. The touch sensor layer and the display layer may be formed using flexible sheets of polymer (e.g., polyimide) or other substrates having thicknesses of 10 microns to 0.5 mm, having thicknesses of less than 0.2 mm, or having other suitable thicknesses (as examples).

The display pixel array may be an organic light-emitting diode (OLED) array, for example. Other types of flexible display pixel arrays may also be formed (e.g., electrowetting displays, electrophoretic displays, flexible liquid crystal displays, flexible electrochromic displays, etc.). The use of OLED technology to form flexible display 414 is sometimes described herein as an example. This is, however, merely illustrative. In general, any suitable type of flexible display technology may be used in forming display 414.

In addition to these functional display layers (i.e., the OLED array and the optional touch sensor array), display 414 may include one or more structural layers. For example, display 414 may be covered with a flexible or rigid cover layer and/or may be mounted on a support structure (e.g., a rigid support). If desired, layers of adhesive may be used to attach flexible display layers to each other and/or to mount flexible display layers to rigid and flexible structural layers.

In some embodiments, display 414 may have an active area such as active area AA and an inactive area such as area IA. In active display region AA, an array of image pixels may be used to present text and images to a user of device 10. In active region AA, display 414 may include touch sensitive components for input and interaction with a user of device 10. If desired, both central portion AA and peripheral portion IA may be provided with display pixels (i.e., all or substantially all of the entire front planar surface of upper housing portion 412A may be provided with display pixels).

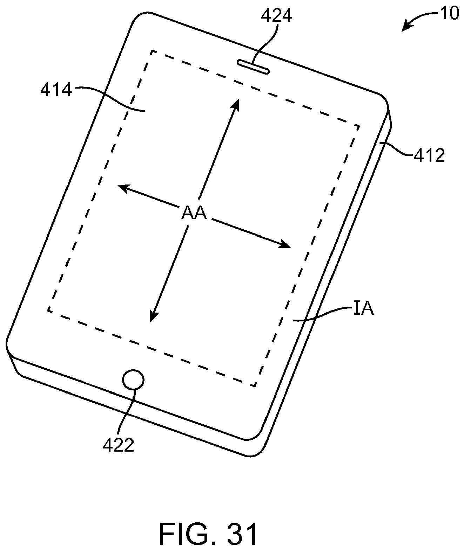

In the example of FIG. 31, device 10 has been implemented using a housing that is sufficiently small to fit within a user's hand (e.g., device 10 of FIG. 31 may be a handheld electronic device such as a cellular telephone). As show in FIG. 31, device 10 may include a display such as display 414 mounted on the front of housing 412. Display 414 may be substantially filled with active display pixels or may have an inactive portion such as inactive portion IA that surrounds an active portion such as active portion AA. Display 414 may have openings (e.g., openings in inactive region IA or active region AA of display 414) such as an opening to accommodate button 422 and an opening to accommodate speaker port 424.

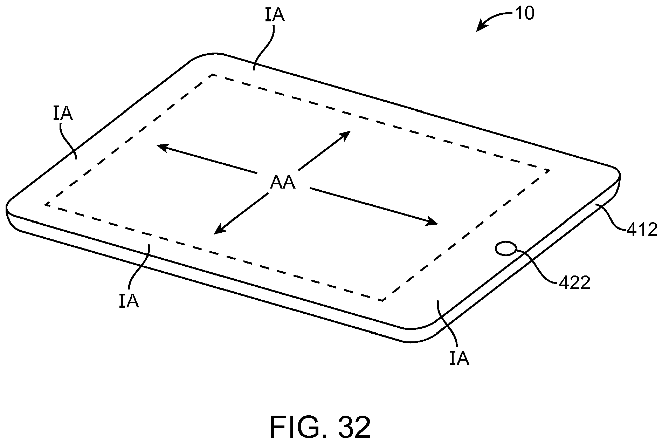

FIG. 32 is a perspective view of electronic device 10 in a configuration in which electronic device 10 has been implemented in the form of a tablet computer. As shown in FIG. 32, display 414 may be mounted on the upper (front) surface of housing 412. An opening may be formed in display 414 to accommodate button 422 (e.g., an opening may be formed in inactive region IA surrounding active region AA).

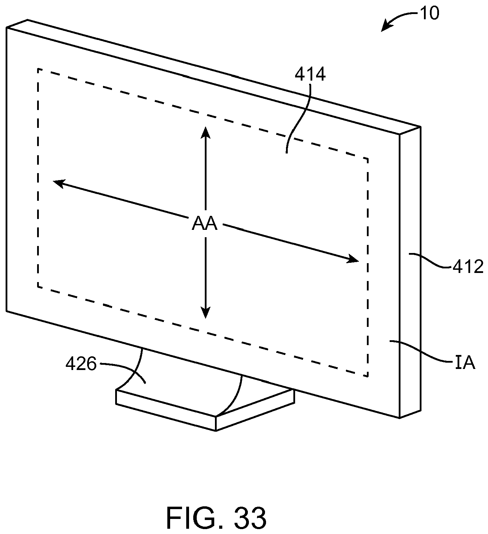

FIG. 33 is a perspective view of electronic device 10 in a configuration in which electronic device 10 has been implemented in the form of a television or in the form of a computer integrated into a computer monitor. As shown in FIG. 33, display 414 may be mounted on the front surface of housing 412. Stand 426 may be used to support housing 412. Display 414 may include an inactive region such as inactive region IA that surrounds active region AA.

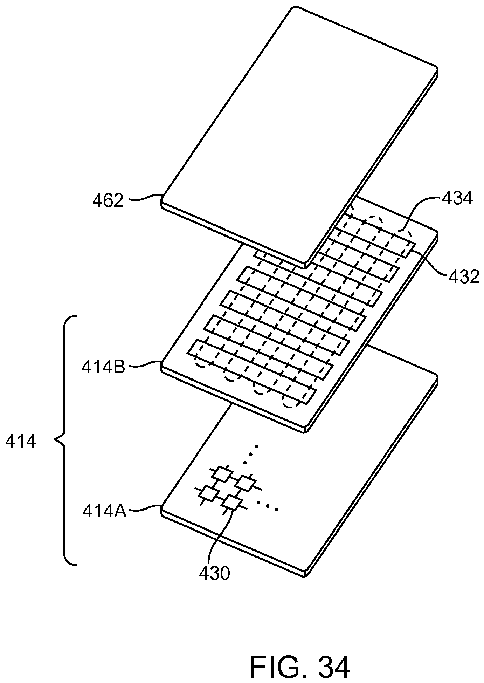

An exploded perspective view of an illustrative display is shown in FIG. 34. As shown in FIG. 34, flexible display 414 may be formed by stacking multiple layers including flexible display layer 414A and touch-sensitive layer 414B. An optional cover layer such as cover layer 462 may be formed over flexible display 414. Cover layer 462 may be a layer of glass, plastic, or other protective display layer.

Flexible display 414 may also include other layers of material such as adhesive layers, optical films, sealant layers, or other suitable layers. Flexible display layer 414A may include image pixels formed from light-emitting diodes (LEDs), organic LEDs (OLEDs), plasma cells, electrowetting display elements, electrophoretic display elements, liquid crystal display (LCD) components, or other suitable image pixel structures compatible with flexible displays.

Touch-sensitive layer 414B may incorporate capacitive touch electrodes such as horizontal transparent electrodes 432 and vertical transparent electrodes 434. Touch-sensitive layer 414B may, in general, be configured to detect the location of one or more touches or near touches on touch-sensitive layer 414B based on capacitive, resistive, optical, acoustic, inductive, or mechanical measurements, or any phenomena that can be measured with respect to the occurrences of the one or more touches or near touches in proximity to touch sensitive layer 414B.

Flexible display 414 may be formed from display pixel array layer 414A and optional touch sensor layer 414B. In the example of FIG. 34, touch-sensitive layer 414B is interposed between cover layer 462 and flexible display layer 414A. This arrangement is merely illustrative. If desired, flexible display layer 414A may be interposed between cover layer 462 and touch-sensitive layer 414B (e.g., flexible display layer 414A may be arranged on top of touch-sensitive layer 414B). If desired, touch-sensitive layer 414B and flexible display layer 414A may be integrated as a single layer. For example, capacitive touch electrodes such as electrodes 432 and 434 and display pixels such as display pixels 430 may be formed on a common substrate, if desired.

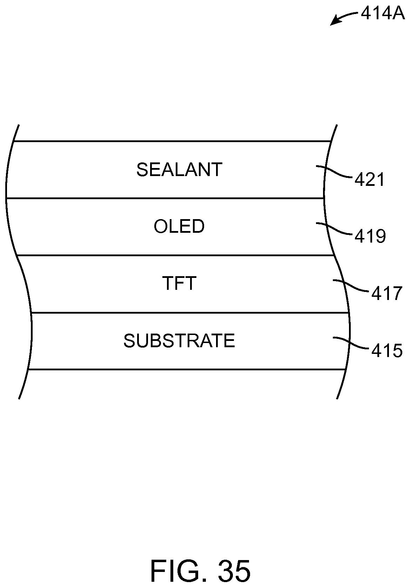

FIG. 35 is a cross-sectional side view of a portion of flexible display layer 414A. As shown in FIG. 35, flexible display layer 414A may contain multiple sublayers. For example, display layer 414A may include a substrate layer such as substrate layer 415. Substrate layer 415 may be formed from a flexible or rigid dielectric such as glass, ceramic, or plastic. As an example, substrate layer 415 may be formed from one or more flexible sheets of polymer (e.g., polyimide). Substrate layer 415 may have a thickness of 10 microns to 0.5 mm, may have a thickness of less than 0.2 mm, or may have other suitable thickness (as examples).

A thin-film transistor (TFT) layer such as TFT layer 417 may include a layer of thin-film transistor structures (e.g., polysilicon transistors and/or amorphous silicon transistors) formed on substrate layer 415.

An organic emissive layer such as OLED layer 419 may be formed over TFT layer 417. OLED layer 419 may include a light-emitting material such as an array of organic light-emitting diode structures that are used to form display pixels such as display pixels 430 of FIG. 34.

A sealant layer such as sealant layer 421 may be formed over OLED layer 419 to protect the structures of OLED layer 419 and TFT layer 417. Sealant layer 421 may be formed from one or more layers of polymer (e.g., one or more layers of polymer that are deposited onto OLED layer 419), metal foil (e.g., a layer of metal foil that is laminated, sputtered, evaporated, or otherwise applied onto OLED layer 419), or other suitable coating or conformal covering.

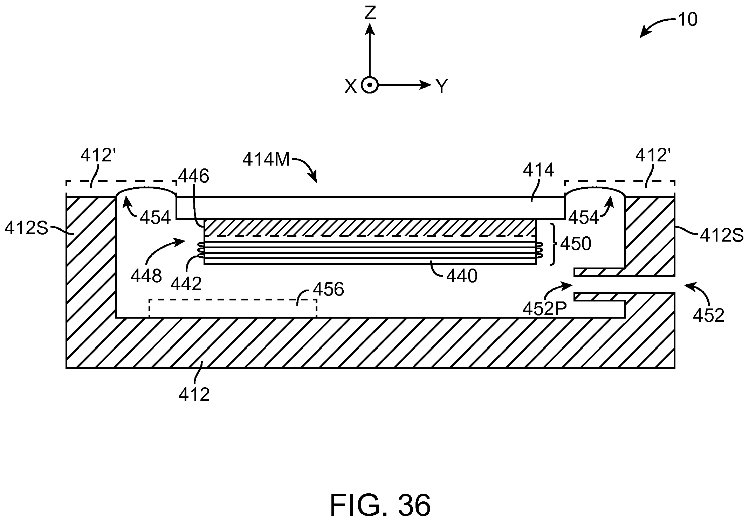

Electronic device 10 may be provided with one or more speaker structures for providing sound to a user of electronic device 10. FIG. 36 is a cross-sectional side view of a portion of electronic device 10 in the vicinity of a speaker structure such as speaker structure 448. Sound produced by speaker structure 448 may be transmitted through flexible display 414 to the exterior of device 10. Flexible display 414 may be used as a speaker membrane structure for speaker 448. Portions such as portion 414M that serve as a speaker membrane for speaker 448 may be located in an active or inactive portion of display 414. Arrangements in which speaker membrane 414M forms an active display area may allow the size of the active region of flexible display 414 to be increased relative to its inactive region.

As shown in FIG. 36, speaker structure 448 may be driven by a transducer such as transducer 450. Transducer 450 may be configured to receive electrical audio signal input from circuitry in device 10 and to convert the electrical signal into sound. In the example of FIG. 36, transducer 450 is formed from a magnet such as magnet 440 surrounded by coils such as coils 442. Magnet 440 may be a permanent magnet formed from ferrite material, ceramic material, iron alloy material, rare earth material, other suitable material, or a combination of these materials. Coils 442 may be formed from copper, aluminum, silver, other suitable materials, etc. If desired, there may be one or more sets of coils surrounding magnet 440.

When current passes through coils 442, a magnetic field is produced. This allows coils 442 to act as a variable electromagnet with a magnetic field that interacts with the constant magnetic field produced by permanent magnet 440. For example, the negative pole of the electromagnet may be repelled by the negative pole of permanent magnet 440. The magnetic force created by this repulsion will force magnet 440 away from coils 442. When the current flowing through coils 442 changes direction, the polarity of the variable electromagnet reverses. Magnet 440 may be pushed back and forth rapidly (along the z-axis) as the current in coils 442 alternates directions.

Portions of flexible display 414 such as portion 414M may form a speaker membrane for speaker 448. As magnet 440 moves back and forth along the z-axis, attached speaker membrane 414M will in turn vibrate the air in front of speaker membrane 414M, creating sound waves.

In some arrangements, an optional support structure such as support structure 446 (sometimes referred to as a stiffening structure or stiffener) may be interposed between transducer 450 and speaker membrane 414M. Support structure 446 may be used to stiffen speaker membrane portion 414M of display 414. Support structure 446 may be formed from a metal plate, from specialized composite structures (e.g., a layer of foam interposed between layers of stiffener, etc.), from other support materials or stiffening structures, or from a combination of these materials. Using a support structure such as support structure 446 may allow speaker membrane 414M to respond more accurately to the movement of magnet 440. In arrangements where optional support structure 446 is not used, magnet 440 may be configured to stiffen portion 414M of display 414 that serves as a speaker membrane structure.

There may be one or more speaker structures 448 in device 10. Some or all of speaker structures 448 in device 10 may have speaker membranes that are formed from flexible display 414. If desired, some, all, or substantially all of flexible display 414 may be used as a speaker membrane for one speaker, for two speakers, for three speakers, or for more than three speakers.

A suspension structure such as suspension structure 454 may be used to attach portions of flexible display 414 to a rigid support structure such as housing 412. Suspension structure 454 may prevent speaker membrane 414M from moving laterally along the x-axis and/or the y-axis, but may allow free motion of speaker membrane 414M along the z-axis as speaker 448 produces sound. Suspension structure 454 may be formed from an elastomeric material, foam material, resin coated material, other suitable materials, or a combination of these materials. As shown in the example of FIG. 36, suspension structure 454 may form a pliant interface between speaker membrane 414M and housing sidewalls 412S. This is merely illustrative. If desired, suspension structure 454 may form a pliant interface between speaker membrane 414M and any suitable surrounding housing structure or any suitable rigid support structure.

If desired, other suspension structures may be incorporated into speaker structure 448. For example, there may be one or more suspension structures attached to magnet 440. This type of suspension structure may provide a restoring force that returns magnet 440 to an equilibrium position after being displaced by magnetic forces.

The desired range of frequencies produced by speaker 448 may depend on several factors. For example, the desired range of frequencies produced by speaker 448 may depend on the type of electronic device in which speaker 448 is implemented, may depend on the location of speaker 448 in device 10, may depend on the other speaker structures that are being used in combination with speaker structure 448, etc. Design choices may be made to obtain a desired frequency response from speaker 448. For example, materials used in forming speaker 448 may be selected based on the desired frequency response.

The type of enclosure that surrounds speaker 448 may also be selected based on the desired frequency response. For example, the enclosure that surrounds the speaker may be ported. As shown in FIG. 36, housing 412 may optionally be provided with an opening or port such as acoustic port 452 (sometimes referred to as a funnel, horn, vent, hole, etc.). Port 452 may be used to equalize the pressure between the inside of housing 412 and the outside of housing 412. This may in turn augment the sound waves produced by speaker 448. A ported enclosure such as the ported enclosure shown in the example of FIG. 36 may increase the magnitude of low-frequency sound waves produced by speaker 448 (e.g., a speaker with a ported enclosure may have a higher bass output than a speaker with a sealed enclosure).

As shown in FIG. 36, port 452 may have a portion such as portion 452P that protrudes into the enclosure. The size and shape of protruding portion 452P may be customized to obtain a desired frequency response. For example, protruding portion 452P of port 452 may have a "horn" shape, in which the diameter of opening 452 varies along the length of portion 452P. Protruding portion 452P may have a curved shape, if desired. In general, protruding portion 452P may have any suitable shape, and opening 452 may have any suitable size. The characteristics of port 452 will depend on the desired frequency response of speaker 448, the structure of device 10, etc., and may be modified accordingly. The example shown in FIG. 36 is merely illustrative.

If desired, speaker 448 may be provided with a sealed enclosure that does not have a port. The example of FIG. 36 in which housing 412 is provided with port 452 is merely illustrative. The type of enclosure into which speaker 448 is implemented (e.g., a sealed enclosure, a ported enclosure, etc.) will depend on the desired frequency response of speaker 448, the structure of device 10, etc., and may be modified accordingly.

Electronic device 10 may have internal components or structures such as internal component 456. Internal components such as internal component 456 may optionally be used to tune the resonant frequency of speaker 448. Internal component 456 may be a battery or other internal structure. If desired, optional component 456 may be omitted or may otherwise not be used to tune the resonant frequency of speaker 448.

If desired, housing 412 may have one or more raised edges such as optional raised portion 412'. Raised portion 412' may have an upper surface that lies above the upper surface of display 414 (e.g., the upper surface of raised portion 412' may protrude above the upper surface of flexible display 414 in vertical dimension z). Optional raised housing 412' may allow a user to hold device 10 in hand without disrupting the speaker functionality of display 414. Raised portion 412' of housing 412 may surround the entire periphery of display 414, or may be located on one side of display 414, on two sides of display 414, on three sides of display 414, or on all four sides of display 414. Raised portion 412' may be formed as an integral part of housing 412 or may be formed as a separate structure in contact with housing 412.

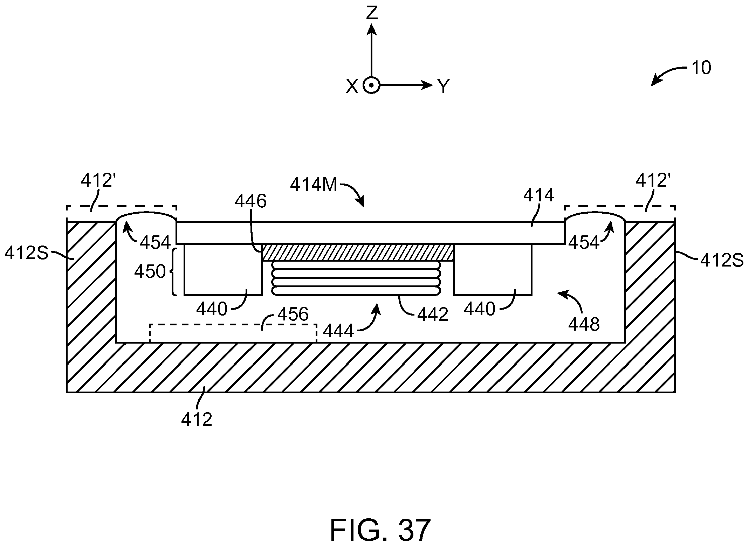

FIG. 37 is a cross-sectional side view of a portion of electronic device 10 in the vicinity of another possible embodiment of speaker structure 448. As shown in FIG. 37, speaker structure 448 may be driven by a transducer such as transducer 450. In the example of FIG. 37, transducer 450 may be formed from one or more central sets of coils 442 surrounded by a magnet such as magnet 440. In some arrangements, inner portion 444 of coils 442 may also contain a magnet structure (e.g., coils 442 may surround a magnet structure). Magnet structures that are formed within inner portion 444 of coils 442 may be formed as an integral part of outer magnet 440 (e.g., may be joined above and/or below coils 442) or may be a separate magnet structure. If desired, inner portion 444 of coils 442 may be free of magnet structures.

As with the transducer of FIG. 36, transducer 450 of FIG. 37 may be configured to receive electrical audio signal input from circuitry in device 10 and to convert the electrical signal into sound. As current passes through coils 442, a magnetic field is produced. The magnetic field produced by coils 442 interacts with the constant magnetic field produced by permanent magnet 440. The interaction of the electromagnet with the constant magnetic field will create a magnetic force between coils 442 and magnet 440 (e.g., an attractive or repulsive force). When the current flowing through coils 442 changes direction, the polarity of the variable electromagnet (and thus the direction of magnetic force) is reversed. Coils 442 may be pushed back and forth (along the z-axis) by the varying magnetic force as the current in coils 442 alternates directions.

As coils 442 move back and forth, attached speaker membrane 414M will in turn vibrate the air in front of speaker membrane 414M, creating sound waves. Support structure 446 may be used to stiffen speaker membrane 414M so that membrane portion 414M of flexible display 414 responds accurately to the movement of transducer 450.

In the example of FIG. 37, speaker 448 may be provided with a sealed enclosure that does not have a port. This is merely illustrative. Any suitable type of enclosure (e.g., a sealed enclosure, a ported enclosure, etc.) may be used. The type of enclosure into which speaker 448 is implemented will depend on the desired frequency response of speaker 448, the structure of device 10, etc., and may be modified accordingly.

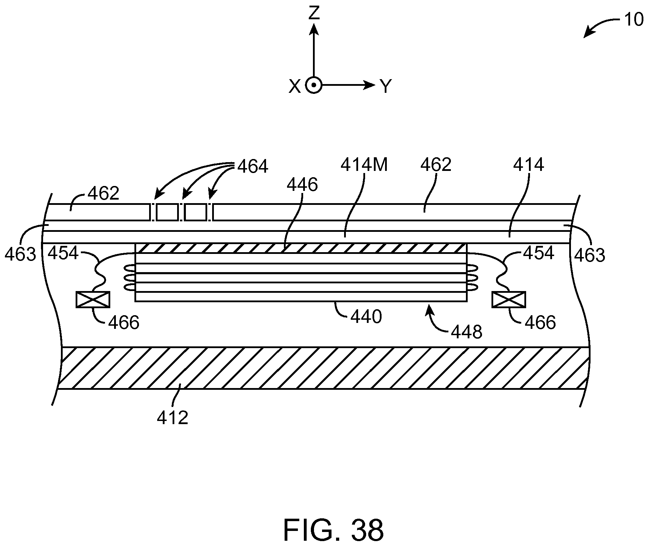

FIG. 38 is a cross-sectional side view of a portion of device 10 in the vicinity of another possible embodiment of speaker structure 448. In the example of FIG. 38, speaker 448 is supported by a rigid structure within device 10 such as rigid structure 466. Rigid structure 466 may be formed from housing structures or internal components, or may be a dedicated structure used to form a frame (sometimes referred to as a chassis or "basket") or other rigid support structure for speaker 448. Suspension structure 454 may be used to form a pliant interface between speaker 448 and rigid structure 466. As with the suspension structure of FIGS. 7 and 8 (in which suspension structure 454 is attached to housing sidewalls 412S), suspension structure 454 of FIG. 38 may prevent speaker membrane portions 414M of display 414 from moving laterally along the x-axis and/or the y-axis, but may allow free motion of speaker membrane 414M along the z-axis as speaker 448 produces sound. Suspension structure 454 may be attached to any suitable portion of speaker 448 (e.g., support structure 446, magnet 440, speaker membrane portion 414M, etc.)

The type of arrangement shown in FIG. 38 may be beneficial for configurations in which speaker 448 is not in the vicinity of housing sidewalls 412S or in other configurations in which speaker 448 is not attached to housing 412. For example, speaker 448 may be located in the central portion of a large display. In this type of configuration, a rigid structure such as rigid structure 466 of FIG. 38 may be used to support speaker 448, if desired.

There may be one or more speakers 448 in device 10. Multiple speakers 448 may be attached to a common rigid structure 466 or each speaker 448 may be attached to a separate rigid structure 466.

If desired, a cover layer such as optional cover layer 462 may be formed over flexible display 414. Cover layer 462 may be formed from glass, plastic, or other suitable material. Cover layer 462 may allow a user to hold device 10 in hand without disrupting the speaker functionality of display 414. Cover layer 462 may also serve to protect display 414 and other parts of device 10 while still allowing speaker membrane 414M to move freely along the z-axis as speaker 448 produces sound. Cover layer 462 may be in contact with display 414 or there may be a gap 463 interposed between cover layer 462 and display 414. Gap 463 may be filled with air or may include a layer of material such as a layer of sealant (as an example).

One or more holes such as holes 464 (sometimes referred to as openings or speaker openings) may be formed in cover layer 462 so that sound may pass from speaker 448 to the exterior of device 10.

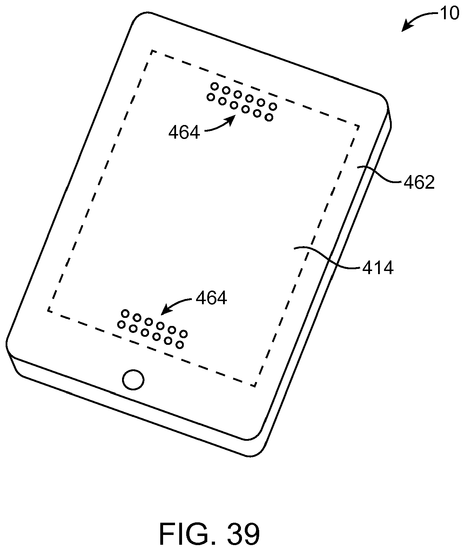

A perspective view of device 10 showing how holes 464 may be formed in cover layer 462 is shown in FIG. 39. As shown in FIG. 39, holes 464 may be formed in a "speaker grill" fashion in which an array of openings is formed in front of one or more speakers. Holes 464 may be formed in cover layer 462 in any suitable location. For example, holes 464 may be formed in localized areas of cover layer 462 that overlap a speaker structure, or holes 464 may be formed in a uniform array that covers some, all, or substantially all of the front surface of display 414. Holes 464 may have any suitable size. For example, holes 464 may have a diameter between .25 mm and .5 mm, between .5 mm and 1 mm, between 1 mm and 1.5 mm, more than 1.5 mm, less than 1.5 mm, etc. The size, shape, and number of openings 464 formed in cover layer 462 may depend on the type and number of speakers 448 in device 10.

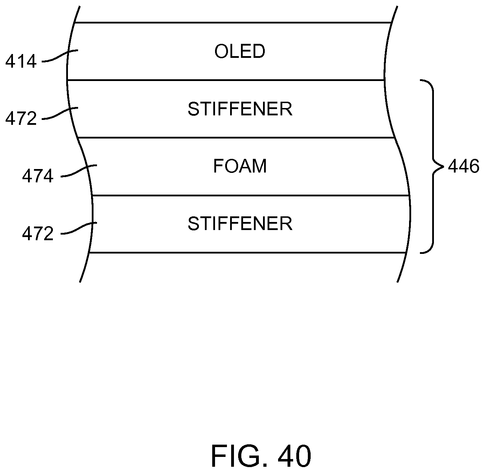

FIG. 40 is a cross-sectional side view of device 10 in the vicinity of support structure 446. Support structure 446 may be used to stiffen portions of flexible display 414. As discussed in connection with FIG. 36, stiffening structure 446 may be formed from a metal plate, from fiber-based composite materials, from laminated layers of one or more materials, or from other suitable materials. As shown in the example of FIG. 40, stiffening structure 446 may be formed from a layer of foam 474 interposed between first and second stiffening sheets 472. Sheets 472 may be formed from polymer, metal, glass, ceramic, fiber-based composites, or other suitable materials. This type of structure may provide a stiff and lightweight support structure for display 414. If desired, support structure 446 may be used to stiffen speaker membrane portions 414M of display 414, may be used to stiffen other portions of display 414, or may be used to stiffen all or substantially all of display 414.

Support structure 446 may be shaped in any desired fashion. For example, support structure 446 may be curved, may be planar, or may have a combination of curved and planar portions.

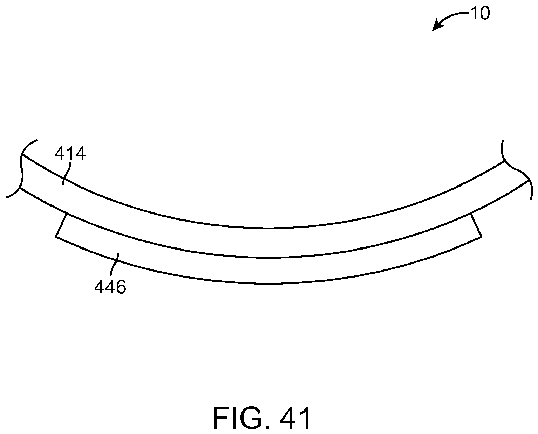

FIG. 41 is a cross-sectional side view of device 10 in the vicinity of curved support structure 446. As shown in FIG. 41, flexible display 414 may conform to the shape of stiffening structure 446. In the example of FIG. 41 stiffening structure 446 has a curved shape so that flexible display 414 is concave. This is, however, merely illustrative. In general, stiffening structure 446 and the attached portion of display 414 may have any suitable shape. For example, stiffening structure 446 may have a curved shape so that flexible display 414 is convex. The example of FIG. 41 in which display 414 has a concave shape may be suitable for configurations in which display 414 forms a speaker membrane for speaker 448. A concave shaped speaker membrane may improve the quality of sound produced by speaker 448. Speakers with convex membranes may also be used.

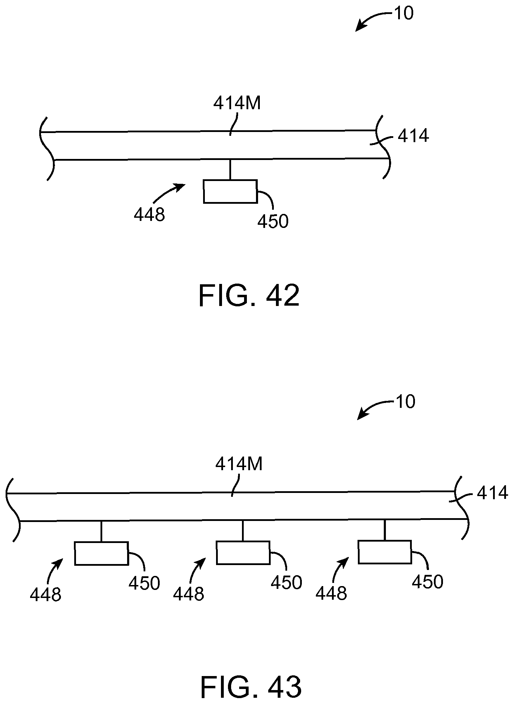

FIG. 42 is a cross-sectional side view of device 10 in the vicinity of a single speaker structure. As shown in FIG. 42, portion 414M of flexible display 414 may form a speaker membrane for speaker structure 448. Transducer 450 for speaker 448 may be any suitable type of transducer (e.g., one or more sets of coils surrounded by a magnet, one or more sets of coils surrounding a magnet, a piezoelectric transducer, a microphone transducer, a sensor, an actuator, etc.). Speaker 448 may be the only speaker in device 10 or may be one of a plurality of speakers in device 10. Display-based speaker structure 448 may be used in conjunction with speaker structures that are not display-based. For example, there may be other speakers in device 10 which do not use display 414 as a speaker membrane. Speaker structure 448 of FIG. 42 may use all or substantially all of display 414 as a speaker membrane (e.g., the entire front face of device 10 may be occupied by a speaker), or may use only a portion of display 414 as a speaker membrane.

In the example of FIG. 43, an array of transducers 450 may be used to form a plurality of display-based speakers 448. Display-based speaker structures 448 may be used in conjunction with speaker structures that are not display-based. Each display-based speaker 448 may have an associated transducer 450. Each associated transducer 450 may be any suitable type of transducer (e.g., one or more sets of coils surrounded by a magnet, one or more sets of coils surrounding a magnet, a piezoelectric transducer, a microphone transducer, a sensor, an actuator, etc.). The type of transducer 450 used may be different for each speaker 448 (e.g., the array of speakers 448 in FIG. 43 may include different types of transducers, if desired). Providing speakers 448 with different types of transducers, different structures, and different characteristics may give device 10 the ability to produce sound with a wider range of frequencies.

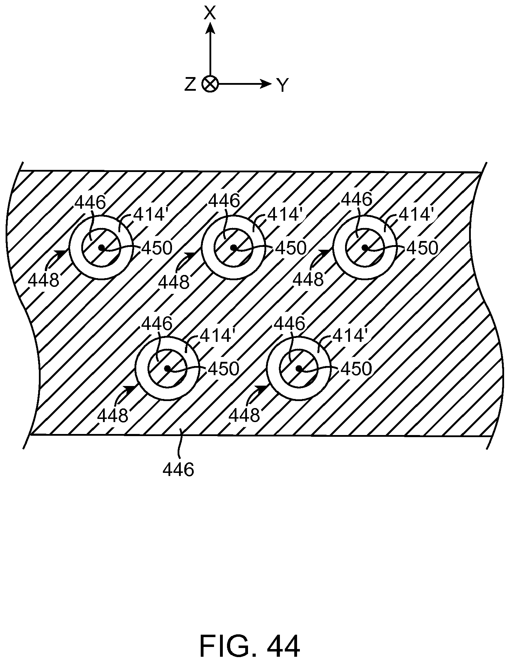

FIG. 44 is a bottom view of a portion of device 10 showing how an array of display-based speakers such as the array shown in FIG. 43 may be implemented in device 10. In the example of FIG. 44, support structure 446 is formed on the underside of display 414. Support structure 446 may be used to stiffen speaker membrane portions 414M of display 414 (e.g., support structure 446 may be interposed between transducer 450 and display 414). Support structure 446 may also be used to stiffen portions of display 414 between adjacent speakers 448.

Each speaker 448 may be surrounded by a ring 414' of flexible display 414 that is not stiffened by support structure 446. Flexible ring-shaped portions 414' of flexible display 414 may provide a barrier structure around each speaker 448 that prevents interference between adjacent speakers 448. For example, as speaker membrane 414M vibrates, ring 414' (which is surrounded by support structure 446) may absorb vibrations moving laterally in display 414 (e.g., in directions along the x-axis and/or y-axis). This may allow adjacent speakers 448 to operate independently without being disrupted by the vibrations of a neighboring speaker.

If desired, speakers 448 may include a variety of speaker types. Examples of speaker types that may be used for speakers 448 include subwoofers, woofers, midrange speakers, tweeters, supertweeters, etc. If desired, different channels of audio input may be routed to each speaker. For example, speakers 448 may include a center channel speaker, a left channel speaker, a right channel speaker, a surround channel speaker, etc. Any suitable characteristic of speakers 448 (e.g., size, type, location, input channel, etc.) may be modified to achieve a desired frequency response and/or to accommodate the structure of device 10.

Electronic devices that contain flexible displays and one or more display-based speaker structures may be provided. The speaker structures may be positioned under the flexible display. Portions of the flexible display may be used as speaker membranes for the speaker structures. The speaker structures may be driven by transducers that convert electrical audio signal input into sound. Piezoelectric transducers or transducers formed from coils and magnets may be used to drive the speaker structures. Speaker membranes may be formed from active display areas of the flexible display. Some, all, or substantially all of the flexible display may be used as a speaker membrane for one or more display-based speaker structures. An optional cover layer may be provided with speaker openings so that sound may pass from the display-based speaker structures to the exterior of the device.

The foregoing is merely illustrative of the principles of this invention and various modifications can be made by those skilled in the art without departing from the scope of the invention. The foregoing embodiments may be implemented individually or in any combination. configured to stiffen the portion of the flexible display that forms the speaker membrane.

In accordance with another embodiment, the stiffening structure includes a layer of foam.

In accordance with another embodiment, the stiffening structure includes first and second stiffening sheets that are attached to opposing first and second sides of the layer of foam.

In accordance with another embodiment, the flexible display includes an active portion configured to display images and the speaker membrane is formed from the active portion of the flexible display.

In accordance with another embodiment, the electronic device further includes a rigid structure and a suspension structure configured to attach portions of the speaker structure to the rigid structure.

In accordance with another embodiment, the electronic device further includes an electronic device housing in which the flexible display is mounted, where the rigid structure is formed at least partly from the electronic device housing.

In accordance with another embodiment, the electronic device further includes a cover layer formed over the flexible display, where the cover layer includes at least one opening formed over the speaker membrane.

In accordance with another embodiment, the electronic device further includes an electronic device housing in which the flexible display is mounted, where the electronic device housing has at least one acoustic port.

In accordance with another embodiment, the flexible display includes an organic light-emitting diode display having a substrate formed from a flexible sheet of polymer.

In accordance with another embodiment an electronic device is provided including a flexible display and a plurality of speaker structures, where portions of the flexible display form speaker membranes for the plurality of speaker structures.

In accordance with another embodiment, the electronic device further includes a plurality of stiffening structures configured to stiffen the portions of the flexible display that form the speaker membranes.

In accordance with another embodiment, the flexible display includes a set of stiffened regions, where each of the stiffened regions in the set of stiffened regions forms part of a respective one of the speaker structures, flexible regions, where each of the flexible regions surrounds a respective one of the stiffened regions in the set of stiffened regions, and a surrounding stiffened region, where each of the flexible regions is surrounded by portions of the surrounding stiffened region.

In accordance with another embodiment, the speaker structures include a left channel speaker and a right channel speaker.

In accordance with another embodiment, the electronic device further includes transducers configured to drive the speaker structures, where each transducer includes coils and a magnet.

In accordance with another embodiment, the electronic device further includes piezoelectric transducers configured to drive the speaker structures.

In accordance with another embodiment, the flexible display includes an organic light-emitting diode display having a substrate formed from a flexible sheet of polymer.

In accordance with another embodiment, a portable electronic device is provided, including a housing, a flexible organic light-emitting diode display mounted in the housing, where the flexible organic light-emitting diode display has a substrate formed from a flexible sheet of polymer, and at least one speaker having a speaker membrane formed from a portion of the flexible sheet of polymer.

In accordance with another embodiment, the portable electronic device further includes a stiffening structure interposed between the at least one speaker and the speaker membrane, where the stiffening structure includes a composite material.

In accordance with another embodiment, the speaker membrane has a concave shape.

In accordance with another embodiment, the housing includes a rectangular housing with four peripheral edges and the flexible organic light-emitting diode display and the speaker membrane extend between the four peripheral edges.

The foregoing is merely illustrative of the principles of this invention and various modifications can be made by those skilled in the art without departing from the scope and spirit of the invention. The foregoing embodiments may be implemented individually or in any combination.

## Claims

1. An electronic device (10), comprising:
a flexible display (14); and
an internal component (24), wherein the flexible display (14) is configured to be deformed by an action external to the device, and wherein deformation of the flexible display (14) creates a response from the internal component (24);
**characterized in that:**
the flexible display (14) further comprises a rigid cover layer (14C) having at least one opening (16), wherein the rigid cover layer (14C) substantially covers the flexible display (14), and wherein the at least one opening (16) is aligned with the internal component (24) wherein the flexible display (14) comprises:
a flexible display layer; and
a touch-sensitive layer.

2. The electronic device (10) defined in claim 1 wherein the flexible display layer of the flexible display (14) includes an active display region (20A), and wherein the internal component (24) is covered with a portion of the active display region (20A) of the flexible display (14).

3. The electronic device (10) defined in any preceding claim wherein the internal component (24) comprises a button (17), and wherein deformation of the flexible display (14) compresses the button (17).

4. The electronic device (10) defined in claim 3 wherein the opening (16) comprises a hole in the rigid cover layer (14C), wherein the button (17) further comprises a button member (52) in the opening (16), wherein the button member (52) moves within the hole in the rigid cover layer (14C), and wherein the movement of the button member (52) in the opening (16) causes deformation of the flexible display (14).

5. The electronic device (10) defined in claim 2 wherein the internal component (24) comprises a pressure sensor (140), and wherein deformation of the flexible display (14) exerts a mechanical pressure on the pressure sensor (140).

6. The electronic device (10) defined in claim 5 wherein the pressure sensor (140) comprises a piezoelectric actuator, and wherein the mechanical pressure induces a voltage on the piezoelectric actuator.

7. The electronic device (10) defined in claim 2 wherein the internal component (24) comprises a laser microphone for detecting a sound originating external to the electronic device (10), and wherein detecting the sound comprises with a laser, detecting deformation of the flexible display (14).

8. The electronic device (10) defined in any preceding claim further comprising an audio component (19) that transmits or receives sound through the flexible display (14).

9. The electronic device (10) defined in claim 8 wherein the flexible display (14) includes an active display region, and wherein the audio component (19) is mounted behind the active display region (20A) of the flexible display (14).

10. The electronic device (10) defined in claim 9 wherein the audio component (19) comprises a diaphragm (70), and wherein the diaphragm (70) is mounted in contact with a portion of the flexible display (14).

11. The electronic device (10) defined in claim 10 further comprising a stiffening structure (446) configured to stiffen the portion of the flexible display (14).

12. The electronic device (10) defined in claim 11 wherein the stiffening structure (446) comprises a layer of foam.

## Patentansprüche

1. Elektronische Vorrichtung (10) umfassend:
eine flexible Anzeige (14), und
eine interne Komponente (24), wobei die flexible Anzeige (14) eingerichtet ist, um durch eine Aktion außerhalb der Vorrichtung deformiert zu werden und wobei die Deformation der flexiblen Anzeige (14) eine Antwort von der internen Komponente (24) erzeugt;
dadurch gezeichnet, dass:
die flexible Anzeige (14) ferner eine starre Abdeckschicht (14C) umfasst, die zumindest eine Öffnung (16) aufweist, wobei die starre Abdeckschicht (14C) im Wesentlichen die flexible Anzeige (14) abdeckt und wobei die zumindest eine Öffnung (16) mit der internen Komponente (24) ausgerichtet ist, wobei die flexible Anzeige (14) umfasst:
eine flexible Anzeigeschicht; und
eine berührungsempfindliche Schicht.

2. Elektronische Vorrichtung (10) nach Anspruch 1, wobei die flexible Anzeigeschicht der flexiblen Anzeige (14) einen aktiven Anzeigebereich (20A) beinhaltet, und wobei die interne Komponente (24) mit einem Abschnitt des aktiven Anzeigebereichs (20A) der flexiblen Anzeige (14) abgedeckt ist.

3. Elektronische Vorrichtung (10) nach irgendeinem der vorhergehenden Ansprüche, wobei die interne Komponente (24) einen Knopf (17) umfasst, und wobei die Deformation der flexiblen Anzeige (14) den Knopf (17) komprimiert.

4. Elektronische Vorrichtung (10) nach Anspruch 3, wobei die Öffnung (16) ein Loch in der starren Abdeckschicht (14C) umfasst, wobei der Knopf (17) ferner ein Knopfelement (52) in der Öffnung (16) umfasst, wobei das Knopfelement (52) sich in dem Loch in der starren Abdeckschicht (14C) bewegt und wobei die Bewegung des Knopfelementes (52) in der Öffnung (16) die Deformation der flexiblen Anzeige (14) verursacht.

5. Elektronische Vorrichtung (10) nach Anspruch 2, wobei die interne Komponente (24) einen Drucksensor (140) umfasst und wobei die Deformation der flexiblen Anzeige (14) einen mechanischen Druck auf den Drucksensor (140) ausübt.

6. Elektronische Vorrichtung (10) nach Anspruch 5, wobei der Drucksensor (140) einen piezoelektrischen Aktuator umfasst und wobei der mechanische Druck eine Spannung auf dem piezoelektrischen Aktuator induziert.

7. Elektronische Vorrichtung (10) nach Anspruch 2, wobei die interne Komponente (24) ein Lasermikrofon zum Erkennen eines Schalls, der von außerhalb der elektronischen Vorrichtung (10) herrührt umfasst und wobei das Erkennen des Schalls ein Erkennen der Deformation der flexiblen Anzeige (14) mit einem Laser umfasst.

8. Elektronische Vorrichtung (10) nach irgendeinem der vorhergehenden Ansprüche, wobei die elektronische Vorrichtung ferner eine Audiokomponente (19) umfasst, die Schall durch die flexible Anzeige (14) sendet oder empfängt.

9. Elektronische Vorrichtung (10) nach Anspruch 8, wobei die flexible Anzeige (14) einen aktiven Anzeigebereich beinhaltet, und wobei die Audiokomponente (19) hinter dem aktiven Anzeigebereich (20A) der flexiblen Anzeige (14) montiert ist.

10. Elektronische Vorrichtung (10) nach Anspruch 9, wobei die Audiokomponente (19) eine Membran (70) umfasst und wobei die Membran (70) in Kontakt mit einem Abschnitt der flexiblen Anzeige (14) montiert ist.

11. Elektronische Vorrichtung (10) nach Anspruch 10, wobei die elektronische Vorrichtung ferner eine Versteifungsstruktur (446) umfasst, die eingerichtet ist, um den Abschnitt der flexiblen Anzeige (14) zu versteifen.

12. Elektronische Vorrichtung (10) nach Anspruch 11, wobei die Versteifungsstruktur (446) eine Schicht aus Schaum umfasst.

## Revendications

1. Un dispositif électronique (10) comprenant :
un afficheur flexible (14) ; et
un composant interne (24), l'afficheur flexible (14) étant configuré pour être déformé par une action extérieure au dispositif, et la déformation de l'afficheur flexible (14) créant une réponse en provenance du composant interne (24) ;
**caractérisé en ce que** :
l'afficheur flexible (14) comprend en outre une couche de recouvrement rigide (14C) présentant au moins une ouverture (16), la couche de recouvrement rigide (14C) recouvrant substantiellement l'afficheur flexible (14), et la au moins une ouverture (14) étant alignée avec le composant interne (24), l'afficheur flexible (14) comprenant :
une couche d'affichage flexible ; et
une couche sensible au toucher.

2. Le dispositif électronique (10) défini dans la revendication 1, dans lequel la couche d'affichage de l'afficheur flexible (14) inclut une région d'affichage active (20A), et dans lequel le composant interne (24) est recouvert par une partie de la région d'affichage active (20A) de l'afficheur flexible (14).

3. Le dispositif électronique (10) défini dans l'une des revendications précédentes, dans lequel le composant interne (24) comprend un bouton (17), et dans lequel la déformation de l'afficheur flexible (14) comprime le bouton (17).

4. Le dispositif électronique (10) défini dans la revendication 3, dans lequel l'ouverture (16) comprend un orifice dans la couche de recouvrement rigide (14C), dans lequel le bouton (17) comprend en outre un élément de bouton (52) dans l'ouverture (16), dans lequel l'élément de bouton (52) se déplace à l'intérieur de l'orifice de la couche de recouvrement rigide (14C), et dans lequel le déplacement de l'élément de bouton (52) dans l'ouverture (16) produit une déformation de l'afficheur flexible (14).

5. Le dispositif électronique (10) défini dans la revendication 2, dans lequel le composant interne (24) comprend un capteur de pression (140), et dans lequel la déformation de l'afficheur flexible (14) exerce une pression mécanique sur le capteur de pression (140).

6. Le dispositif électronique (10) défini dans la revendication 5, dans lequel le capteur de pression (140) comprend un actionneur piézoélectrique, dans lequel la pression mécanique induit une tension sur l'actionneur piézoélectrique.

7. Le dispositif électronique (10) défini dans la revendication 2, dans lequel le composant interne (24) comprend un microphone laser pour la détection d'un son provenant de l'extérieur du dispositif électronique (10), et dans lequel la détection du son comprend la détection par un laser de la déformation de l'afficheur flexible (14).

8. Le dispositif électronique (10) défini dans l'une des revendications précédentes, comprenant en outre un composant audio (19) qui émet ou reçoit du son au travers de l'afficheur flexible (14).

9. Le dispositif électronique (10) défini dans la revendication 8, dans lequel l'afficheur flexible (14) comprend une région d'affichage active, et dans lequel le composant audio (19) est monté derrière la région d'affichage active (20A) de l'afficheur flexible (14).

10. Le dispositif électronique (10) défini dans la revendication 9, dans lequel le composant audio (19) comprend un diaphragme (70), et dans lequel le diaphragme (70) est monté en contact avec une partie de l'afficheur flexible (14).

11. Le dispositif électronique (10) défini dans la revendication 10, comprenant en outre une structure raidisseuse (446) configurée pour raidir la partie de l'afficheur flexible (14).

12. Le dispositif électronique (10) défini dans la revendication 11, dans lequel la structure raidisseuse (446) comprend une couche de mousse.
